# EUROPEAN PATENT SPECIFICATION

(11) **EP 4 303 805 B1**
(45) Date of publication and mention of the grant of the patent: **07.10.2026**
(21) Application number: 22767370.4
(22) Date of filing: 23.02.2022
(51) Int. Cl.: G06T 5/60, G06T 5/70, G06V 40/16, G06V 10/82, H04N 1/60, H04N 19/117, H04N 19/85

(54) **ELECTRONIC DEVICE FOR IMPROVING QUALITY OF IMAGE AND METHOD FOR IMPROVING QUALITY OF IMAGE BY USING SAME**
ELEKTRONISCHE VORRICHTUNG ZUR VERBESSERUNG DER BILDQUALITÄT UND VERFAHREN ZUR VERBESSERUNG DER BILDQUALITÄT DAMIT
DISPOSITIF ÉLECTRONIQUE POUR AMÉLIORER LA QUALITÉ D'IMAGE ET PROCÉDÉ POUR AMÉLIORER LA QUALITÉ D'IMAGE À L'AIDE DE CELUI-CI

(30) Priority: 09.03.2021 KR 20210030934
(43) Date of publication of application: 10.01.2024
(73) Proprietor: Samsung Electronics Co., Ltd., Suwon-si, Gyeonggi-do 16677 (KR)
(72) Inventor: LEE, Jungmin, Suwon-si, Gyeonggi-do 16677 (KR); LEE, Hyungdong, Suwon-si, Gyeonggi-do 16677 (KR)
(74) Representative: Gulde & Partner
(86) International application number: PCT/KR2022/002649
(87) International publication number: WO 2022/191474

(56) References cited:
- CN-A- 107 330 381
- CN-A- 108 304 816
- CN-A- 110 532 871
- JP-A- 2019 501 454
- KR-A- 20140 061 028
- KR-A- 20200 075 063
- KR-B1- 101 737 619
- KR-B1- 102 132 690

## Description

### Technical Field

Described embodiments relate to an electronic device for enhancing the quality of an image and a method of enhancing the quality of an image by using the electronic device.

### Background Art

Unlike an existing rule-based smart system, an artificial intelligence (Al) system is a computer system for implementing human-level intelligence and allows a machine to learn, determine, and become more intelligent by itself. Because the Al system may have a higher recognition rate and more accurately understand user tastes as it is used more, existing rule-based systems have been gradually replaced with deep learning-based Al systems.

Al technology may include machine learning (deep learning) and element technologies utilizing machine learning.

Machine learning may be an algorithm technology for classifying/learning the characteristics of input data by itself, and the elementary technologies may be technologies using a machine learning algorithm such as deep learning and may include technical fields such as linguistic understanding, visual understanding, reasoning/prediction, knowledge representation, and motion control.

Various fields to which Al technology is applied are as follows.

Linguistic understanding may be a technology for recognizing and applying/processing human languages/characters and may include natural language processing, machine translation, dialog system, question answering, speech recognition/synthesis, and the like.

Visual understanding may be a technology for recognizing and processing objects like human vision and may include object recognition, object tracking, image retrieval, human recognition, scene understanding (scene recognition), space understanding (3D reconstruction/localization), image enhancement, and the like.

Reasoning/prediction may be a technology for reasoning and predicting logically by determining information and may include knowledge-based reasoning, optimization prediction, preference-based planning, recommendation, and the like.

Knowledge representation may be a technology for automatically processing human experience information into knowledge data and may include knowledge construction (data generation/classification), knowledge management (data utilization), and the like. Motion control may be a technology for controlling autonomous driving of a vehicle and motion of a robot and may include motion control (navigation, collision, and driving), operation control (behavior control), and the like.

Also, Al technology may be used to obtain images such as pictures and videos and enhance the image quality thereof.

CN 110532871 A discloses an image processing method including the face detection is performed on the single-frame video data to determine whether a face exists in the image, the super-resolution processing is performed on the human face to compensate, and the face super-resolution model corresponding to this vector processes the face image and outputs a high-resolution face image, wherein the face image is processed by the super-resolution model to obtain a high-resolution face image and output a high-resolution face image. CN 108304816 A relates to a method for recognizing identity by using electronic device, which involves obtaining super-resolution of human face image, and performing identification process when super-resolution of human face image reaches preset pixel value. The method involves extracting a human face image from a target image frame. Super-resolution of the human face image is obtained. Identification process is performed when the super-resolution of the human face image reaches a preset pixel value. Judgment is made to check whether a pixel value of the human face image is less than the preset pixel value. A super-resolution model of the human face image is then established. CN 107330381 A relates to a face identification method. The method involves inputting a human face image. A human face is divided into a clear human face and a low resolution human face. A face feature is established by a deep learning network according to a classification result. A similarity of the human face is detected.

### Disclosure

### Technical Solution

As a technical means for achieving the above technical object, a method of generating, by an electronic device, a second person image of high quality by performing image processing on a first person image of low quality by using an artificial intelligence model is provided as defined by the appended set of claims.

### Description of Drawings

FIG. 1 is a diagram illustrating that an electronic device obtains a high-quality person image from a low-quality person image, according to an embodiment.
FIG. 2 is a flowchart illustrating a method by which an electronic device obtains a high-quality person image from a low-quality person image, according to an embodiment.
FIG. 3 is a diagram illustrating that an electronic device applies person images as training data to an artificial intelligence model, according to an embodiment.
FIG. 4 is a diagram illustrating that an electronic device applies person images as training data to an artificial intelligence model, according to an embodiment.
FIG. 5 is a diagram illustrating that an electronic device obtains a face feature from a person image by using an artificial intelligence model, according to an embodiment.
FIG. 6 is a diagram illustrating that an electronic device performs image quality enhancement on an image quality enhancement area received from a user, according to an embodiment.
FIG. 7 is a flowchart illustrating a method by which an electronic device enhances an image quality of an image quality enhancement area received from a user, according to an embodiment.
FIG. 8 is a diagram illustrating that an electronic device enhances an image quality according to an image quality enhancement direction received from a user, according to an embodiment.
FIG. 9 is a flowchart illustrating a method by which an electronic device enhances an image quality according to an image quality enhancement direction received from a user, according to an embodiment.
FIG. 10 is a block diagram of an electronic device according to an embodiment.
FIG. 11 is a block diagram of a software module stored in a memory of an electronic device, according to an embodiment.
FIG. 12 is a block diagram of a server according to an embodiment.
FIG. 13 is a block diagram of a software module stored in a memory of a server, according to an embodiment.

### Mode for Invention

As a technical means for achieving the above technical object, a method of generating, by an electronic device, a second person image of high quality by performing image processing on a first person image of low quality by using an artificial intelligence model may include identifying the first person image, applying the first person image to the artificial intelligence model, and obtaining the second person image output from the artificial intelligence model, wherein the artificial intelligence model may be configured to recognize a first face by performing face identification and face recognition on the first person image by using a face recognition artificial intelligence model, obtain the second person image by performing image processing for enhancing an image quality of an area corresponding to the first face by using an image quality enhancement artificial intelligence model, and output the second person image to the electronic device.

As a technical means for achieving the above technical object, an electronic device for generating a second person image of high quality by performing image processing on a first person image of low quality by using an artificial intelligence model may include a memory storing at least one instruction, and a processor configured to execute the at least one instruction, wherein the processor may be configured to execute the at least one instruction to identify the first person image, apply the first person image to the artificial intelligence model, and obtain the second person image output from the artificial intelligence model, wherein the artificial intelligence model may be configured to recognize a first face by performing face identification and face recognition on the first person image by using a face recognition artificial intelligence model, obtain the second person image by performing image processing for enhancing an image quality of an area corresponding to the first face by using an image quality enhancement artificial intelligence model, and output the second person image to the electronic device.

As a technical means for achieving the above technical object, a computer-readable recording medium may have recorded thereon a program for executing at least one of embodiments of the described method, on a computer.

As a technical means for achieving the above technical object, an application stored in a recording medium may be used to execute at least one function in embodiments of the described method.

The specification clarifies the scope of the present disclosure and describes the principle of the present disclosure and embodiments thereof so that those of ordinary skill in the art of the present disclosure may implement the present disclosure. The described embodiments may be implemented in various forms. The described embodiments may be implemented alone or implemented in combination of at least two or more embodiments.

Throughout the specification, like reference numerals may denote like elements. The specification may not describe all elements of the embodiments, and redundant descriptions between the embodiments or general descriptions in the art of the present disclosure will be omitted for conciseness. The term "unit (part or portion)" used herein may be a hardware component such as a processor or a circuit and/or a software component executed by a hardware component such as a processor, and according to embodiments, a plurality of "units" may be implemented as one element, or one "unit" may include a plurality of elements. Hereinafter, the operation principle and embodiments of the present disclosure will be described with reference to the accompanying drawings.

Some embodiments of the present disclosure may be represented by functional block components and various processing operations. Some or all of these functional blocks may be implemented by any number of hardware and/or software components that execute particular functions. For example, the functional blocks of the present disclosure may be implemented by one or more microprocessors or may be implemented by circuit components for a certain function. Also, for example, the functional blocks of the present disclosure may be implemented in various programming or scripting languages. The functional blocks may be implemented as an algorithm executed in one or more processors. Also, the present disclosure may employ the related art for electronic environment setting, signal processing, and/or data processing. Terms such as "mechanism," "element," "unit," and "component" may be widely used and are not limited to mechanical and physical components.

Throughout the specification, when an element is referred to as being "connected" to another element, it may be "directly connected" to the other element or may be "electrically connected" to the other element with one or more intervening elements therebetween. Also, when a part "includes" or "comprises" a component, unless there is a particular description contrary thereto, the part may further include other components, not excluding the other components.

Also, the connection lines or connection members between the elements illustrated in the drawings are merely examples of functional connections and/or physical or logical connections. In an actual apparatus, the connections between elements may be represented by various functional connections, physical connections, or logical connections that are replaceable or added.

Also, although terms including ordinals such as "first" and "second" may be used herein to describe various elements, these elements should not be limited by these terms. These terms are merely used to distinguish one element from other elements. For example, although first data and second data are mentioned herein, they are merely used to distinguish between different data and the present disclosure should not be limited thereto.

An electronic device according to the present disclosure uses an artificial intelligence model to generate a high-quality image from a low-quality image. Functions related to artificial intelligence according to the present disclosure may be operated through a processor and a memory. The processor may include one or more processors. In this case, the one or more processors may include a general-purpose processor such as a central processing unit (CPU), an application processor (AP), or a digital signal processor (DSP), a graphic dedicated processor such as a graphic processing unit (GPU) or a vision processing unit (VPU), or an artificial intelligence dedicated processor such as a neural processing unit (NPU). The one or more processors may control input data to be processed according to a predefined operation rule or artificial intelligence model stored in the memory. Alternatively, when the one or more processors include an artificial intelligence dedicated processor, the artificial intelligence dedicated processor may be designed with a hardware structure specialized for processing a particular artificial intelligence model. The processor may perform a preprocessing process of converting data to be applied to the artificial intelligence model into a form suitable for application to the artificial intelligence model.

The artificial intelligence model may be generated through training. Here, being generated through training may mean that a basic artificial intelligence model is trained by a learning algorithm by using a plurality of pieces of training data and accordingly a predefined operation rule or artificial intelligence model set to perform a desired feature (or purpose) is generated. Such training may be performed in a machine itself in which artificial intelligence according to the present disclosure is performed, or may be performed through a separate server and/or system. Examples of the learning algorithm may include, but are not limited to, supervised learning, unsupervised learning, semi-supervised learning, or reinforcement learning.

The artificial intelligence model may include a plurality of neural network layers. Each of the plurality of neural network layers may have a plurality of weights (weight values) and may perform a neural network operation through an operation between the plurality of weights and the operation result of a previous layer. The plurality of weights of the plurality of neural network layers may be optimized by the learning results of the artificial intelligence model. For example, the plurality of weights may be updated (refined) such that a loss value or a cost value obtained by the artificial intelligence model during the learning process may be reduced or minimized. The artificial neural network may include Deep Neural Network (DNN) and may include, for example, Generative Adversarial Network (GAN), Convolutional Neural Network (CNN), Deep Neural Network (DNN), Recurrent Neural Network (RNN), Restricted Boltzmann Machine (RBM), Deep Belief Network (DBN), Bidirectional Recurrent Deep Neural Network (BRDNN), or Deep Q-Networks but is not limited thereto.

The described artificial intelligence model may be generated by learning a plurality of text data and image data input as training data according to a certain criterion. The artificial intelligence model may generate and output result data by performing a learned function in response to input data.

Also, the described artificial intelligence model may include a plurality of artificial intelligence models trained to perform at least one function.

Hereinafter, embodiments will be described in detail with reference to the accompanying drawings.

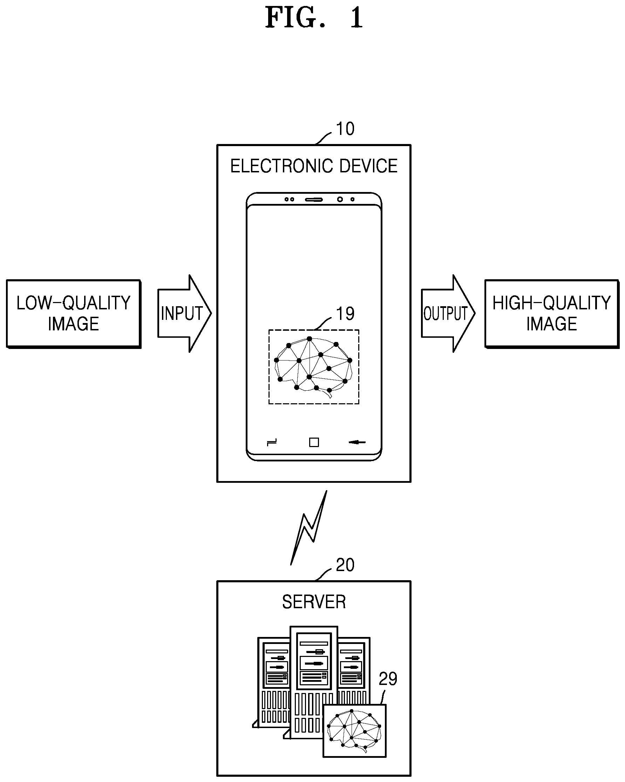

FIG. 1 is a diagram illustrating that an electronic device obtains a high-quality person image from a low-quality person image, according to an embodiment.

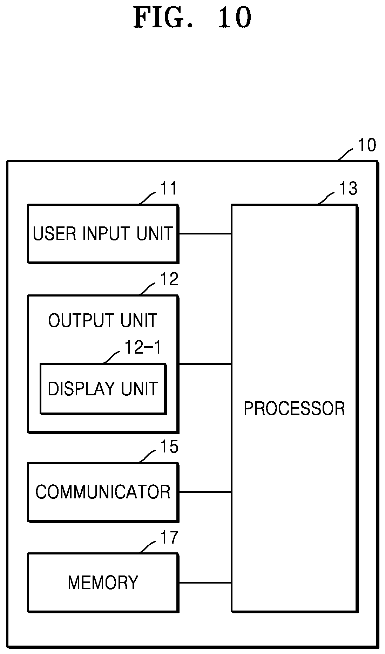

Referring to FIG. 1, an electronic device 10 generates a second person image of high quality by performing image processing on a first person image of low quality by using an artificial intelligence model. The electronic device 10 may store the generated second person image in a memory 17 (see FIG. 10) or output the same on a display unit 12-1 (see FIG. 10).

In the described embodiment, a low-quality image may generally refer to an image that is difficult to identify or is degraded, such as an image in which the number of pixels is smaller than a certain number, an image whose boundary line is obscured due to noise included therein, or an image whose color temperature and tone are incorrectly designated.

In the described embodiment, a high-quality image may generally refer to an image that is easy to identify, such as an image including a certain number of pixels or more, an image with clear boundary lines included therein, or an image with accurate color temperature and tone.

In the described embodiment, image quality enhancement (enhancement of image quality) may mean reducing degradation factors of an image. For example, the image quality enhancement may include image processing such as resolution enhancement, noise removal, artifact removal, color adjustment, and/or definition enhancement.

In the described embodiment, the electronic device 10 identifies a low-quality person image. The electronic device 10 applies a low-quality person image to an artificial intelligence model. The artificial intelligence model **is** trained to generate and output a high-quality person image by performing image processing on a low-quality person image. The electronic device 10 may store a high-quality person image output from the artificial intelligence model in the memory 17 or output the same through the display unit 12-1.

In the described embodiment, the artificial intelligence model may be constructed in at least one of the electronic device 10 and a server 20. Hereinafter, the artificial intelligence model constructed in the electronic device 10 will be described as an example; however, the present disclosure is not limited thereto. The artificial intelligence model constructed in the electronic device 10 described below may be analogically applied to the artificial intelligence model constructed in the server 20.

According to an embodiment, the electronic device 10 may include a computing device such as a general-purpose computer (a personal computer (PC)) or a mobile device (e.g., a smart phone or a tablet PC) capable of transmitting/receiving data to/from the server 20 through a network. Also, the electronic device 10 may include an Internet of Things (IoT) device or a home hub device (e.g., a router or an interactive artificial intelligence speaker) connected to various loT devices and the server 20. Also, the electronic device 10 may include a computing device such as a server, a general-purpose computer (a personal computer (PC)), or a mobile device (e.g., a smart phone or a tablet PC) in which an artificial intelligence model 19 is constructed.

According to an embodiment, the electronic device 10 may perform certain operations by using the artificial intelligence model 19. For example, the electronic device 10 may perform operations of identifying and classifying input data and outputting data corresponding to the input data by using the artificial intelligence model 19.

According to an embodiment, the server 20 may transmit/receive data to/from the electronic device 10. For example, the server 20 may apply data received from the electronic device 10, to an artificial intelligence model 29 and transmit data output from the artificial intelligence model 29, to the electronic device 10. As another example, the server 20 may transmit data used to update the artificial intelligence model 19 constructed in the electronic device 10, to the electronic device 10.

According to an embodiment, the artificial intelligence model may include a plurality of artificial intelligence models trained to perform a certain function. For example, the artificial intelligence model may include, but is not limited to, a preprocessing artificial intelligence model for performing preprocessing as a type applicable to the artificial intelligence model, an image quality classification artificial intelligence model for classifying the image quality of a person image applied to the artificial intelligence model, a face identification (face detection) artificial intelligence model for detecting at least one face in a person image, a face recognition artificial intelligence model for identifying a person corresponding to a face identified from a person image, and/or an image quality enhancement artificial intelligence model for generating a high-quality person image by performing image processing on a low-quality person image. There may be a plurality of artificial intelligence models performing the same function, and one artificial intelligence model may perform at least one or more functions of the described embodiments.

According to an embodiment, the artificial intelligence model may perform training of the artificial intelligence model by using training data. For example, the artificial intelligence model may perform training of the face identification artificial intelligence model, the face recognition artificial intelligence model, and the image quality enhancement artificial intelligence model by using a plurality of person images as training data. As another example, the artificial intelligence model may use a high-quality person image and a low-quality person image obtained by converting the high-quality person image, as a pair of training data. As another example, the artificial intelligence model may use a plurality of person images classified by person, as training data. As another example, the artificial intelligence model may use training data about an image quality enhancement area selected by the user. As another example, the artificial intelligence model may use training data about an image quality enhancement direction selected by the user.

**The** electronic device 10 may perform image quality enhancement according to a user input for selecting an image. For example, the electronic device 10 may perform image quality enhancement by applying an image designated by the user to perform image quality enhancement, to the artificial intelligence model.

According to an embodiment, the electronic device 10 may perform image quality enhancement on an image stored in the electronic device 10, during a time when the user does not use the electronic device 10. For example, during an idle time, the electronic device 10 may identify whether an image stored in the electronic device 10 is a low-quality image and perform image quality enhancement thereon.

According to the described embodiment, the electronic device 10 obtains a high-quality image by identifying a low-quality image and performing image quality enhancement thereon.

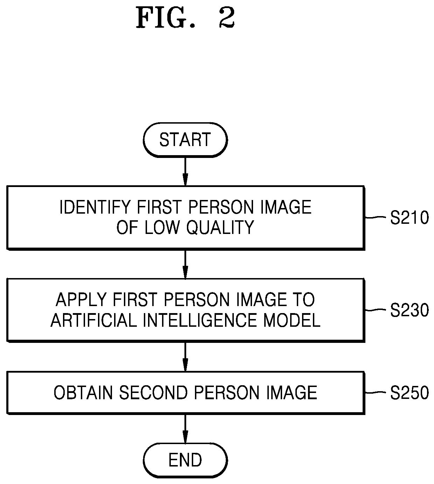

FIG. 2 is a flowchart illustrating a method by which an electronic device obtains a high-quality person image from a low-quality person image, according to an embodiment.

In operation S210, the electronic device 10 identifies a first person image of low quality. For example, the electronic device 10 may identify the first person image stored in the memory 17 of the electronic device 10. As another example, the electronic device 10 may identify the first person image obtained by using a camera of the electronic device 10. As another example, the electronic device 10 may identify the first person image shared on the Web. As another example, the electronic device 10 may identify the first person image shared through an application.

**The** electronic device 10 may identify the first person image based on a user input for selecting a low-quality person image. For example, the electronic device 10 may identify the first person image based on a user input for selecting an image on which image quality enhancement is desired to be performed, among a plurality of person images.

The electronic device 10 may identify a first person image of low quality based on a certain criterion. For example, the electronic device 10 may identify an image including a number of pixels less than a certain number and an image having a frequency of a boundary line less than or equal to a certain value.

According to **the** embodiments, the electronic device 10 identifies the first person image by using the artificial intelligence model. The electronic device 10 identifies a first person image of low quality from a plurality of images by using a discrimination (disclaimer) artificial intelligence model. In this case, an artificial intelligence model trained to distinguish between a high-quality person image and a high-quality person image generated by the image quality enhancement artificial intelligence model from a low-quality person image is used as the discrimination artificial intelligence model.

In operation S230, the electronic device 10 applies the first person image to the artificial intelligence model. The electronic device 10 applies the first person image identified in operation S210, to the artificial intelligence model.

According to an embodiment, the electronic device 10 may apply the preprocessed first person image to the artificial intelligence model. For example, the electronic device 10 may identify a face in the first person image (face detection) and apply information about the face identification result to the artificial intelligence model, together with the first person image. As another example, the electronic device 10 may recognize a face in the first person image (face recognition) and apply information about a person corresponding to the recognized face to the artificial intelligence model, together with the first person image. As another example, the electronic device 10 may apply information about the result of classifying the first person image as a low-quality image based on a certain criterion to the artificial intelligence model, together with the first person image. Alternatively, the artificial intelligence model may directly perform preprocessing on the first person image input without performing the preprocessing described above.

According to an embodiment, the electronic device 10 may apply information about an input for selecting an image quality enhancement area of the person included in the first person image received from the user, to the artificial intelligence model. For example, the electronic device 10 may apply information about a user input for selecting to increase the details of the eyes of the person, to the artificial intelligence model.

According to an embodiment, the electronic device 10 may apply information about an input for selecting an image quality enhancement direction of the first person image received from the user, to the artificial intelligence model. For example, the electronic device 10 may apply information about a user input for selecting to modify the first person image to be similar to a certain image, to the artificial intelligence model. Particularly, the electronic device 10 may apply information about at least one of the color, definition, or resolution of the image selected by the user, to the artificial intelligence model. For example, the electronic device 10 may apply information about a user input for selecting to modify the person included in the first person image to be similar to a certain person, to the artificial intelligence model.

According to an embodiment, the electronic device 10 may transmit the first person image to the server 20 in order to apply the first person image to the artificial intelligence model constructed in the server 20.

According to an embodiment, the artificial intelligence model may have learned a plurality of person images as training data in order to perform face identification and face recognition from the person image and perform image quality enhancement on the recognized face.

According to an embodiment, the artificial intelligence model may have learned a high-quality person image and a low-quality person image obtained by applying degradation to the high-quality person image, as a pair, in order to perform image quality enhancement on the low-quality person image.

According to an embodiment, the artificial intelligence model may have performed personalized learning on each of the persons by using a plurality of person images classified by person as training data. Also, the artificial intelligence model having performed personalized learning may have been lightened.

According to an embodiment, the artificial intelligence model may be trained to obtain a face feature of each person by performing personalized learning. Also, the artificial intelligence model may be trained to identify and recognize a corresponding person from a person image based on the obtained face feature. Also, the artificial intelligence model may be trained to enhance the image quality based on the obtained face feature. For example, the artificial intelligence model may be trained to enhance the image quality by performing image processing on an area on an image corresponding to the image quality enhancement area selected by the user, based on the obtained face feature. As another example, the artificial intelligence model may be trained to enhance the image quality by modifying the obtained face feature according to the image quality enhancement direction selected by the user.

In operation S250, the electronic device 10 obtains a second person image of high quality output from the artificial intelligence model. The electronic device 10 obtains the second person image obtained by performing image quality enhancement on the first person image by the artificial intelligence model, from the artificial intelligence model.

According to an embodiment, the electronic device 10 may obtain the second person image generated by performing image quality enhancement on the face recognized from the first person image. For example, the electronic device 10 may obtain the second person image generated by performing image processing on the first person image to increase the resolution thereof. As another example, the electronic device 10 may obtain the second person image generated by performing image processing on the first person image to remove the noise thereof. As another example, the electronic device 10 may obtain the second person image generated by performing image processing to adjust the color of the first person image. As another example, the electronic device 10 may obtain the second person image generated by performing image processing to adjust the color of the first person image. As another example, the electronic device 10 may obtain the second person image generated by performing image processing to enhance the definition of the first person image.

According to an embodiment, the electronic device 10 may obtain the second person image in which image quality enhancement has been performed on an area corresponding to the image quality enhancement area selected by the user, from the artificial intelligence model. For example, the electronic device 10 may apply information about a user input for selecting to increase the details of the eyes of the person, to the artificial intelligence model.

According to an embodiment, the electronic device 10 may obtain the second person image in which image quality enhancement has been performed according to the image quality enhancement direction selected by the user, from the artificial intelligence model. For example, the electronic device 10 may obtain the second person image in which image quality enhancement has been performed according to a user input for selecting to modify the first person image to be similar to a certain image. Particularly, the electronic device 10 may obtain the second person image in which image quality enhancement has been performed to be similar to at least one of the color, definition, or resolution of the image selected by the user. As another example, the electronic device 10 may obtain the second person image in which the person included in the first person image has been modified to be similar to a certain person according to a user input.

According to an embodiment, the electronic device 10 may receive the second person image generated from the artificial intelligence model constructed in the server 20.

According to an embodiment, the electronic device 10 may display the second person image on the display unit 12-1. The electronic device 10 may display the first person image and the second person image together so that they may be compared with each other.

According to an embodiment, the electronic device 10 may store the second person image in the memory 17 according to the user's confirmation input for the image quality enhancement result. The electronic device 10 may store the second person image at a position where the first person image is stored. For example, the electronic device 10 may store the second person image together with the first person image. Alternatively, the electronic device 10 may store the second person image in replacement of the first person image.

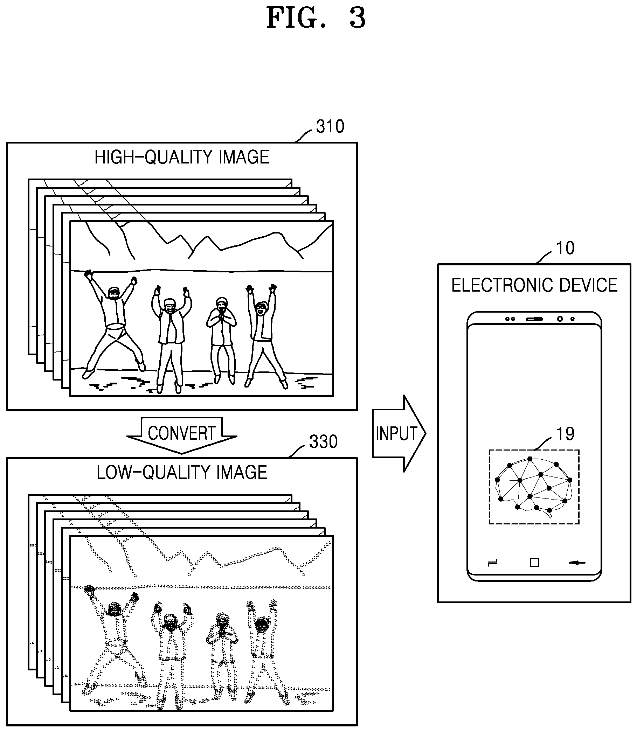

FIG. 3 is a diagram illustrating that an electronic device applies person images as training data to an artificial intelligence model, according to an embodiment.

Referring to FIG. 3, the electronic device 10 may apply a plurality of high-quality images 310 and a plurality of low-quality images 330 as training data to the artificial intelligence model. For example, the electronic device 10 may identify a plurality of images stored in the memory 17 of the electronic device 10 and apply the same to the artificial intelligence model. As another example, the electronic device 10 may download a plurality of images posted on the Web and apply the same to the artificial intelligence model. As another example, the electronic device 10 may apply a plurality of images shared through an application, to the artificial intelligence model.

According to an embodiment, the electronic device 10 may apply the plurality of high-quality images 310 and the plurality of low-quality images 330 respectively degraded from the plurality of high-quality images 310, as training data to the artificial intelligence model.

For example, the electronic device 10 may apply the plurality of high-quality images 310 and the plurality of low-quality images 330 respectively obtained by performing downsampling on the plurality of high-quality images 310, to the artificial intelligence model.

As another example, the electronic device 10 may apply the plurality of high-quality images 310 and the plurality of low-quality images 330 respectively obtained by performing image processing to apply noise to the plurality of high-quality images 310, to the artificial intelligence model.

As another example, the electronic device 10 may apply the plurality of high-quality images 310 and the plurality of low-quality images 330 respectively obtained by performing image processing to apply blur to the plurality of high-quality images 310, to the artificial intelligence model.

As another example, the electronic device 10 may apply the plurality of high-quality images 310 and the plurality of low-quality images 330 respectively obtained by performing image processing to change the color of the plurality of high-quality images 310, to the artificial intelligence model.

As another example, the electronic device 10 may apply the plurality of high-quality images 310 and the plurality of low-quality images 330 respectively obtained by performing image processing to change the color of the plurality of high-quality images 310, to the artificial intelligence model.

According to an embodiment, the electronic device 10 may group a high-quality image and a low-quality image into a pair and apply the same to the artificial intelligence model. For example, the electronic device 10 may group a first high-quality image 311 among the plurality of high-quality images 310 and a first low-quality image 313 degraded and converted from the first high-quality image 311, into a pair and apply the first high-quality image 311 and the first low-quality image 313 together to the artificial intelligence model.

According to an embodiment, the electronic device 10 may apply only the plurality of high-quality images 310 to the artificial intelligence model. The artificial intelligence model 19 may obtain the plurality of low-quality images 330 by performing degradation on the plurality of high-quality images 310 respectively. The artificial intelligence model 19 may perform training by using the plurality of high-quality images 310 and the plurality of low-quality images 330 as training data.

According to an embodiment, the electronic device 10 may perform preprocessing on the plurality of high-quality images 310 and the plurality of low-quality images 330 and apply the results thereof to the artificial intelligence model. For example, the electronic device 10 may identify a face from the plurality of high-quality images 310 and the plurality of low-quality images 330, extract areas corresponding to the identified face, and apply the same as training data to the artificial intelligence model.

According to an embodiment, the artificial intelligence model 19 may learn the first high-quality image 311 and the first low-quality image 331 applied thereto.

For example, the artificial intelligence model 19 may train the image quality enhancement artificial intelligence model to generate the first high-quality image 311 from the first low-quality image 331. Also, the artificial intelligence model 19 may train the discrimination artificial intelligence model that compares a second high-quality image generated from the first low-quality image 331 with the first high-quality image 311 and identifies the difference therebetween.

Particularly, the artificial intelligence model may train the image quality enhancement artificial intelligence model to apply an object function (Loss Function) of Equation 1.
[Equation 1] ${L}_{total} = {L}_{GAN} + {L}_{recon}$

*Lₜₒₜₐₗ* is an object function (Loss Function) of the image quality enhancement artificial intelligence model, *L_{GAN}* is an object function (Loss Function) of a general GAN-based artificial intelligence model, and *L_{recon}* is an object function (Loss Function) by which the image quality enhancement artificial intelligence model generates a high-quality image from a low-quality image as similarly as possible.

Also, the artificial intelligence model 19 may train the discrimination artificial intelligence model to distinguish between the first high-quality image 311 and the second high-quality image by using the object function (Loss Function).

Although a method of training the artificial intelligence model constructed in the electronic device 10 has been described above, it may also be analogically applied to a method of training the artificial intelligence model constructed in the server 20.

According to an embodiment, the electronic device 10 may receive information about the trained artificial intelligence model from the server 20. For example, the server 20 may train the artificial intelligence model constructed in the server 20 and transmit data about the artificial intelligence model 19 updated by training, to the electronic device 10. In this case, the electronic device 10 may receive information about the updated weight among the weights of the artificial intelligence model and update the artificial intelligence model 19 constructed in the electronic device 10, by using the received information.

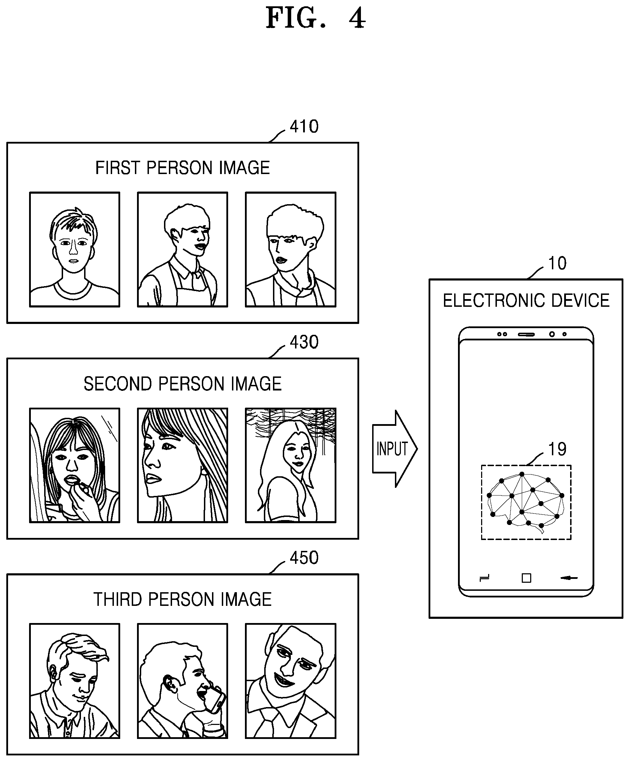

FIG. 4 is a diagram illustrating that an electronic device applies person images as training data to an artificial intelligence model, according to an embodiment.

Referring to FIG. 4, the electronic device 10 may generate a database (DB) including various person images about a particular person by personalizing and classifying each of a plurality of person images to be included in one of a plurality of persons. That is, the electronic device 10 may personalize and classify the plurality of person images like a first person image 410, a second person image 430, and a third person image 450. The electronic device 10 may personalize and train the artificial intelligence model by applying the classified first person image 410, second person image 430, and third person image 450 as training data to the artificial intelligence model.

According to an embodiment, the electronic device 10 may personalize and classify the plurality of person images based on an input selected as the same person by the user.

According to an embodiment, the electronic device 10 may personalize and classify the plurality of person images based on a path where the images are stored. For example, the electronic device 10 may personalize and classify the images stored in the same folder of the memory 17, as images of the same person.

According to an embodiment, the electronic device 10 may personalize and classify the plurality of person images based on the user that has provided an image. For example, the electronic device 10 may personalize and classify the images provided from the same user by using a messenger application, as images of the same person.

According to an embodiment, the electronic device 10 may personalize and classify the plurality of person images by using the artificial intelligence model. For example, the electronic device 10 may perform face detection from the plurality of person images by using the face detection artificial intelligence model. The electronic device 10 may identify a first face by performing face recognition on the detected face by using the face recognition artificial intelligence model. Based on the face recognition result, the electronic device 10 may identify a first person corresponding to the first face among a plurality of persons.

According to an embodiment, the electronic device 10 may apply information about the result of personalized classification of the plurality of person images to the artificial intelligence model, together with the plurality of person images. For example, the electronic device 10 may insert a tag about the result of personalized classification into a plurality of high-quality person images and a plurality of low-quality person images. The electronic device 10 may apply the plurality of high-quality person images and the plurality of low-quality person images with the tag inserted thereinto, to the artificial intelligence model. In this case, the plurality of low-quality person images may be generated by applying degradation to the plurality of high-quality person images.

According to an embodiment, the electronic device 10 may apply the plurality of person images, on which face recognition is not performed, to the artificial intelligence model. The artificial intelligence model 19 may train the face identification artificial intelligence model and the face recognition artificial intelligence model by using the plurality of person images as training data.

According to an embodiment, the artificial intelligence model 19 may update the image quality enhancement artificial intelligence model by personalizing and training the image quality enhancement artificial intelligence model by using a plurality of input person images. The updated image quality enhancement artificial intelligence model may be a model specialized to enhance the image quality of a low-quality image of a particular person. For example, by training the image quality enhancement artificial intelligence model by using the first person image 410, the second person image 430, and the third person image 450, the artificial intelligence model may obtain an image quality enhancement artificial intelligence model specialized to enhance the image quality of a low-quality image of a first person, a second person, and a third person.

According to an embodiment, the artificial intelligence model 19 may perform lightening on at least one of the face detection artificial intelligence model, the face recognition artificial intelligence model, and the image quality enhancement artificial intelligence model that perform personalized learning. For example, the artificial intelligence model 19 may apply a lightening technique such as filter pruning to the image quality enhancement artificial intelligence model. The artificial intelligence model 19 may obtain an image quality enhancement artificial intelligence model in which an image quality enhancement performance on a particular person that has been personalized and learned is excellent and data is lightened. As another example, the artificial intelligence model 19 may obtain a face recognition artificial intelligence model in which a face recognition performance on a particular person that has been personalized and learned is excellent and data is lightened.

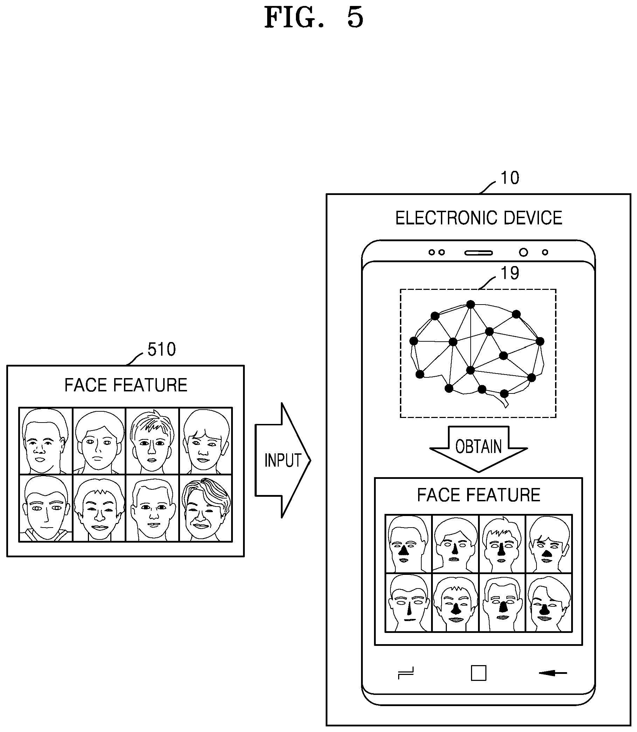

FIG. 5 is a diagram illustrating that an electronic device obtains a face feature from a person image by using an artificial intelligence model, according to an embodiment.

Referring to FIG. 5, by applying a person image 510 to the artificial intelligence model 19, the electronic device 10 may obtain a face feature of a person included in the person image 510.

According to an embodiment, the artificial intelligence model 19 may perform face detection from the person image 510. For example, the artificial intelligence model 19 may detect at least one face from the person image 510 by using the face detection artificial intelligence model.

According to an embodiment, the artificial intelligence model 19 may obtain a face feature from the detected face. For example, the artificial intelligence model 19 may obtain a face feature such as the outline of the face, the shape, size, ratio, and position of the landmark of the face (e.g., eyes, nose, mouth, or ears), or the details of the face (e.g., eyebrows, wrinkles, hair, or skin tone) detected from the person image by using the face recognition artificial intelligence model.

According to an embodiment, the artificial intelligence model 19 may obtain a face feature of a particular person by performing personalized learning by the face recognition artificial intelligence model. For example, the artificial intelligence model 19 may obtain a face feature of the first person by learning a person image of the first person.

According to an embodiment, the artificial intelligence model 19 may update the face recognition artificial intelligence model by using the obtained face feature. For example, the artificial intelligence model 19 may update the weight of the face recognition artificial intelligence model by using the face feature of a particular person.

According to an embodiment, the artificial intelligence model 19 may update the image quality enhancement artificial intelligence model by using the obtained face feature. For example, the artificial intelligence model 19 may train the image quality enhancement artificial intelligence model to modify the face feature such as the outline of the face, the shape, size, and position of the landmark of the face (e.g., eyes, nose, mouth, or ears), or the details of the face (e.g., eyebrows, wrinkles, or hair).

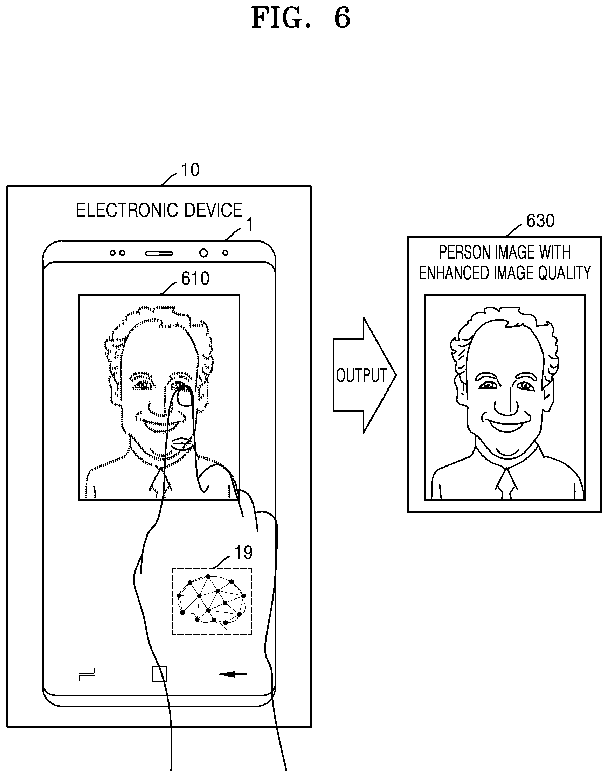

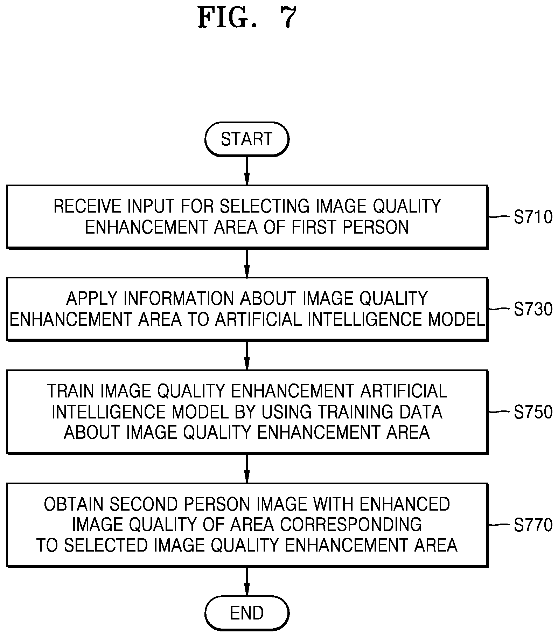

FIG. 6 is a diagram illustrating that an electronic device performs image quality enhancement on an image quality enhancement area received from a user, according to an embodiment, and FIG. 7 is a flowchart illustrating a method by which an electronic device enhances an image quality of an image quality enhancement area received from a user, according to an embodiment.

Referring to FIG. 6, the electronic device 10 may receive an input for selecting an image quality enhancement area of a person included in a first person image 610, from the user. The electronic device 10 may output a second person image 630 obtained by enhancing the image quality of the first person image 610 based on the input received from the user.

In operation S710, the electronic device 10 may receive, from a user 1, an input for selecting an image enhancement area and may identify the user's selected image enhancement area.

For example, the electronic device 10 may receive, from the user 1, a user input for selecting an area requiring image quality enhancement among the person's face areas included in the first person image 610. Referring to FIG. 6, for example, the electronic device 10 may receive, from the user 1, a user input for selecting the eyes of the person included in the first person image 610.

As another example, the electronic device 10 may receive a user input for selecting an area requiring image quality enhancement, which is provided as a list (preset), among the person's face areas included in the first person image 610.

FIG. 6 illustrates that the electronic device 10 receives a user input for selecting an image quality enhancement area based on a touch input of the user 1; however, the present disclosure is not limited thereto. The electronic device 10 may identify the image quality enhancement area based on a user input received through various interfaces capable of receiving a user input.

According to an embodiment, the electronic device 10 may detect the face of the first person and the feature of the face of the first person from the first person image 610 by using the face detection artificial intelligence model. By using the face detection artificial intelligence model, the electronic device 10 may identify an area corresponding to the image quality enhancement area selected by the user 1. For example, the electronic device 10 may detect a face feature by using the face detection artificial intelligence model and perform face parsing based on the detected face feature, thereby identifying that an area where a user input is received corresponds to the eye of the first person.

According to an embodiment, by using the face recognition artificial intelligence model, the electronic device 10 may detect the first person corresponding to the face detected from the first person image 610.

In operation S730, the electronic device 10 may apply information about the image quality enhancement area to the artificial intelligence model 19.

According to an embodiment, the electronic device 10 may apply information about the image quality enhancement area to the artificial intelligence model 19 together with the first person image 610. For example, the electronic device 10 may apply the first person image 610 in which an area where a user input is received is marked, to the artificial intelligence model 19. As another example, the electronic device 10 may apply feature information about an area where a user input is received, to the artificial intelligence model 19 together with the first face image 610. As another example, the electronic device 10 may apply information about a face area corresponding to an area where a user input is received, to the artificial intelligence model 19 together with the first face image 610.

According to an embodiment, the electronic device 10 may apply information about the first person identified from the first person image 610 by using the face recognition artificial intelligence model, to the artificial intelligence model 19 together with the first person image 610. The electronic device 10 may apply a plurality of high-quality images including the first person to the artificial intelligence model 19 together with the first person image 610.

In operation S750, the electronic device 10 may train the artificial intelligence model by using training data about the image quality enhancement area.

According to an embodiment, the artificial intelligence model 19 may identify the image quality enhancement area from the first person image 610 based on information about the image quality enhancement area that is input thereto. For example, the artificial intelligence model 19 may identify the image quality enhancement area from the first person image 610 based on information about the face area (e.g., eyes) selected by the user 1.

According to an embodiment, the artificial intelligence model 19 may obtain training data about the image quality enhancement area based on information about the image quality enhancement area that is input thereto. For example, the artificial intelligence model 19 may obtain a plurality of high-quality images of the user-selected face area (e.g., eyes) based on information about the user-selected face area (e.g., eyes). The artificial intelligence model 19 may output data for requesting application of the plurality of high-quality images to the electronic device 10.

According to an embodiment, the artificial intelligence model 19 may train the face detection artificial intelligence model to perform face parsing by learning the training data input from the electronic device 10.

According to an embodiment, the artificial intelligence model 19 may set an object function (Loss Function) of the image quality enhancement artificial intelligence model based on the face parsing result data output from the face detection artificial intelligence model and the information about the image quality enhancement area selected by the user. For example, the artificial intelligence model 19 may set a weighted loss-based object function (Loss Function) to the image quality enhancement artificial intelligence model.

According to an embodiment, the artificial intelligence model 19 may train the image quality enhancement artificial intelligence model by using the training data input from the electronic device 10. The artificial intelligence model 19 may train the image quality enhancement artificial intelligence model by using the object function (Loss Function) set to the image quality enhancement artificial intelligence model and the training data input from the electronic device 10. For example, the artificial intelligence model 19 may train the image quality enhancement artificial intelligence model by using the plurality of high-quality images of the user-selected face area (e.g., eyes). As another example, the artificial intelligence model 19 may train the image quality enhancement artificial intelligence model for enhancing the image quality of the user-selected face area (e.g., eyes) of the first person by using the plurality of high-quality images of the first person included in the first person image 610.

In operation S770, the electronic device 10 may obtain a second person image with an enhanced image quality of the image quality enhancement area.

According to an embodiment, the artificial intelligence model 19 may generate a second person image 630 by performing quality enhancement on the first person image 610 by using the image quality enhancement artificial intelligence model updated in operation S750. For example, the artificial intelligence model 19 may generate the second person image 630 by performing image quality enhancement on a certain face image (e.g., eyes) of the first person included in the first person image 610. The artificial intelligence model 19 may output the generated second person image 630 to the electronic device.

According to an embodiment, the electronic device 10 may display the second person image on the display unit 12-1. The electronic device 10 may display the first person image and the second person image together so that they may be compared with each other.

According to an embodiment, the electronic device 10 may store the second person image 630 output from the artificial intelligence model 19, in the memory 17. For example, the electronic device 10 may store the second person image in a path where the first person image is stored. For example, the electronic device 10 may store the second person image together with the first person image. Alternatively, the electronic device 10 may store the second person image in replacement of the first person image.

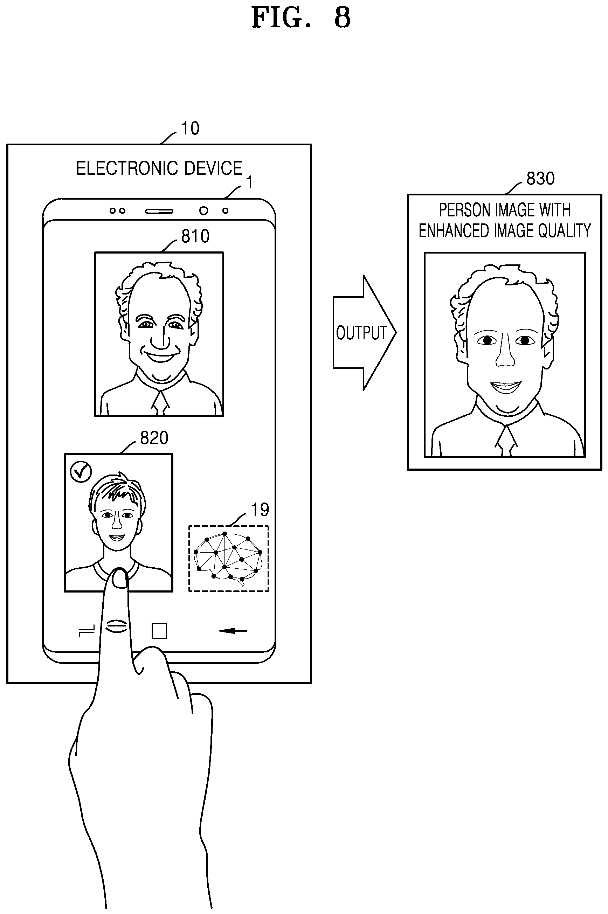

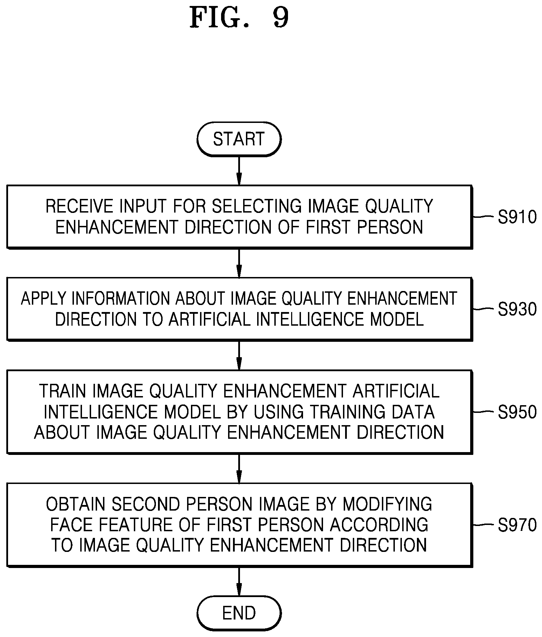

FIG. 8 is a diagram illustrating that an electronic device enhances an image quality according to an image quality enhancement direction received from a user, according to an embodiment, and FIG. 9 is a flowchart illustrating a method by which an electronic device enhances an image quality according to an image quality enhancement direction received from a user, according to an embodiment.

Referring to FIG. 8, the electronic device 10 may obtain feature information from a third person image 820 based on an input of a user 1 selecting the third person image 820 in an image enhancement direction of a first person image 810. The electronic device 10 may obtain a second person image 830 by enhancing the image quality of the first person image 810 by using the feature information obtained from the third person image 820.

For example, by using the artificial intelligence model 19, the electronic device 10 may obtain the second person image 830 by performing image processing to increase the resolution of the first person image 810 to correspond to the resolution of the third person image 820.

As another example, by using the artificial intelligence model 19, the electronic device 10 may obtain the second person image 830 by performing image processing to adjust the color of the first person image 810 to correspond to the color of the third person image 820.

As another example, by using the artificial intelligence model 19, the electronic device 10 may obtain the second person image 830 by performing image processing to adjust the definition of the first person image 810 to correspond to the definition of the third person image 820.

As another example, by using the artificial intelligence model 19, the electronic device 10 may obtain the second person image 830 by performing image processing to adjust the face feature of the first person included in the first person image 810 in accordance with the face feature of the second person included in the third person image 820.

In operation S910, the electronic device 10 may receive an input about the image quality enhancement direction from the user.

According to an embodiment, the electronic device 10 may receive, from the user, an input about the image quality enhancement direction for adjusting at least one of the resolution, definition, or color of the first person image 810, the noise removal therefrom, or the removal of an artifact generated during image compression.

For example, the electronic device 10 may receive an input about the image quality enhancement direction from the user through an interface for selecting at least one of the resolution, definition, or color of the first person image 810, the noise removal therefrom, or the removal of an artifact generated during image compression.

As another example, the electronic device 10 may receive a user input for selecting the third person image 820 such that the first person image 810 includes an image attribute similar to the image attribute of the third person image 820. That is, the electronic device 10 may receive a user input for selecting the image quality enhancement direction such that the first person image 810 corresponds to at least one of the resolution, definition, color, noise, or artifact of the third person image 820.

According to an embodiment, the electronic device 10 may receive, from the user, an input about the image quality enhancement direction for modifying the face feature of the first person included in the first person image 810. Particularly, the electronic device 10 may receive an input about the image quality enhancement direction for adjusting the face feature of the first person included in the first person image 810 in accordance with the face feature of the second person included in the third person image 820.

In operation S930, the electronic device 10 may apply information about the image quality enhancement direction to the artificial intelligence model.

According to an embodiment, the electronic device 10 may apply information about the image quality enhancement direction to the artificial intelligence model 19 together with the first person image 810. For example, the electronic device 10 may apply information about at least one of the resolution, definition, or color of the first person image 810 selected by the user, the noise removal therefrom, or the removal of an artifact generated in an compressed image, to the artificial intelligence model 19 together with the first person image 810. As another example, the electronic device 10 may apply the third person image 820 selected by the user to the artificial intelligence model 19 together with the first person image 810.

According to an embodiment, the electronic device 10 may apply a plurality of high-quality data related to the second person included in the third person image 820 as training data to the artificial intelligence model 19 together with the first person image 810. For example, the electronic device 10 may detect a face from the third person image 820 and identify the second person corresponding to the detected face. The electronic device 10 may obtain a plurality of high-quality images including the second person. The electronic device 10 may generate a plurality of low-quality images by performing application of degradation on each of the plurality of high-quality images including the second person and apply the plurality of generated low-quality images as training data to the artificial intelligence model together with the plurality of high-quality images.

In operation S950, the electronic device 10 may train the artificial intelligence model by using training data about the image quality enhancement direction.

According to an embodiment, the artificial intelligence model 19 may obtain feature vectors of the third person image 820 from the third person image 820. The artificial intelligence model 19 may train the image quality enhancement artificial intelligence model by using the feature vectors of the third person image 820. For example, the artificial intelligence model 19 may obtain feature vectors about at least one of the resolution, definition, color, noise, or artifact of the third person image 820 and train the image quality enhancement artificial intelligence model to enhance the image quality of the first person image 810 according to the image quality enhancement direction selected by the user, by using the obtained feature vectors.

According to an embodiment, the artificial intelligence model 19 may obtain the face feature of the second person from the third person image 820. For example, the artificial intelligence model 19 may obtain a face feature such as the outline of the face, the shape, size, and position of the landmark of the face (e.g., eyes, nose, mouth, or ears), or the details of the face (e.g., eyebrows, wrinkles, hair, or skin tone) of the second person from the third person image 820 by using the face recognition artificial intelligence model.

According to an embodiment, the artificial intelligence model 19 may obtain the face feature of the second person from a plurality of images applied together with the third person image 820. For example, the artificial intelligence model 19 may detect the face of the second person from each of the plurality of high-quality images including the second person and obtain the face feature of the second person. For example, the artificial intelligence model 19 may detect the face of the second person from each of the plurality of low-quality images generated by performing application of degradation on the plurality of high-quality images including the second person and obtain the face feature of the second person.

According to an embodiment, the artificial intelligence model 19 may train the image quality enhancement artificial intelligence model by using the obtained face feature of the second person. For example, the artificial intelligence model 19 may set an object function (Loss Function) of the image quality enhancement artificial intelligence model such that the face feature of the second person image 830 generated by the image quality enhancement artificial intelligence model by using the face feature obtained from the first person image 810 is similar to the face feature obtained from the third person image 820. The artificial intelligence model 19 may train the image quality enhancement artificial intelligence model by using the object function (Loss Function) set to the image quality enhancement artificial intelligence model and the training data input from the electronic device 10.

In operation S970, the electronic device 10 may obtain a second person image according to the image quality enhancement direction.

According to an embodiment, the artificial intelligence model 19 may obtain the second person image 830 by performing image processing of at least one of the resolution enhancement, definition enhancement, or color adjustment of the first person image 810, the noise removal therefrom, or the removal of an artifact generated in a compressed image to correspond to the image quality enhancement direction selected by the user, by using the image quality enhancement artificial intelligence model. For example, the artificial intelligence model 19 may perform image processing on the first person image 810 such that the first person image 810 corresponds to at least one of the resolution, definition, color, noise, or artifact of the third person image 820.

According to an embodiment, the artificial intelligence model 19 may obtain the second person image 830 by adjusting the face feature of the first person included in the first person image 810 in accordance with the face feature of the second person included in the third person image 820 by using the image quality enhancement artificial intelligence model. For example, the artificial intelligence model 19 may adjust the shape, size, and ratio of the landmark of the face of the first person in accordance with the shape, size, and ratio of the landmark of the face of the second person (e.g., eyes, nose, mouth, or ears). As another example, the artificial intelligence model 19 may adjust the details of the face of the first person in accordance with the details of the face of the second person (e.g., eyebrows, wrinkles, hair, or skin tone).

FIG. 10 is a block diagram of an electronic device according to an embodiment.

Referring to FIG. 10, an electronic device 10 may include a user input unit 11, an output unit 12, a processor 13, a communicator 15, and a memory 17. However, not all of the components illustrated in FIG. 10 are necessary components of the electronic device 10. The electronic device 10 may be implemented by more components than the components illustrated in FIG. 10 or may be implemented by less components than the components illustrated in FIG. 10.

The user input unit 11 may refer to a unit through which the user inputs data for controlling the electronic device 10. For example, the user input unit 11 may include, but is not limited to, a touch screen, a key pad, a dome switch, a touch pad (e.g., a capacitive overlay type, a resistive overlay type, an infrared beam type, a surface acoustic wave type, an integral strain gauge type, or a piezoelectric type), a jog wheel, and/or a jog switch.

The user input unit 11 may receive a user input necessary for the electronic device 10 to perform the embodiments described with reference to FIGS. 1 to 9.

The output unit 12 may output information processed by the electronic device 10. The output unit 12 may output information related to the embodiments described with reference to FIGS. 1 to 9. Also, the output unit 12 may include a display unit 12-1 for displaying the result of performing an operation corresponding to a user input, an object, or a user interface.

The processor 13 may generally control an overall operation of the electronic device 10. For example, by executing at least one instruction stored in the memory 17, the processor 13 may overall control the user input unit 11, the output unit 12, the communicator 15, and the memory 17 to perform federated learning.

For example, by executing an instruction stored in a face identification and face recognition module 17a, the processor 13 may control the electronic device 10 to detect a face from an image and identify a person corresponding to the detected face. Redundant descriptions with the embodiments described above with reference to FIGS. 1 to 9 will be omitted for conciseness.

As another example, by executing an instruction stored in a face feature obtaining module 17b, the processor 13 may control the electronic device 10 to obtain a feature of a face detected from an image. Redundant descriptions with the embodiments described above with reference to FIGS. 1 to 9 will be omitted for conciseness.

As another example, by executing an instruction stored in an image quality enhancing module 17c, the processor 13 may control the electronic device 10 to enhance an image quality of an image. Redundant descriptions with the embodiments described above with reference to FIGS. 1 to 9 will be omitted for conciseness.

As another example, by executing an instruction stored in an artificial intelligence model training module 17d, the processor 13 may control the electronic device 10 such that the artificial intelligence model learns training data. Redundant descriptions with the embodiments described above with reference to FIGS. 1 to 9 will be omitted for conciseness.

The processor 13 may be at least one processor that is generally used. Also, the processor 13 may include at least one processor manufactured to perform the function of the artificial intelligence model. The processor 13 may execute a series of instructions to cause the artificial intelligence model to learn new training data. By executing a software module stored in the memory 17, the processor 13 may perform the function of the artificial intelligence model described above with reference to FIGS. 1 to 9.

The communicator 15 may include one or more components for allowing the electronic device 10 to communicate with another device (not illustrated) and a server 20. The other device (not illustrated) may be a computing device such as the electronic device 10; however, the present disclosure is not limited thereto.

The memory 17 may store at least one instruction and at least one program for processing and controlling by the processor 13 and may store data that is input to the electronic device 10 or output from the electronic device 10.

The memory 17 may include at least one type of storage medium from among memory such as random access memory (RAM) or static random access memory (SRAM) for temporarily storing data and data storage such as flash memory type, hard disk type, multimedia card micro type, card type memory (e.g., SD or XD memory), read only memory (ROM), electronically erasable programmable read only memory (EEPROM), programmable read only memory (PROM), magnetic memory, magnetic disk, or optical disk for non-temporarily storing data.

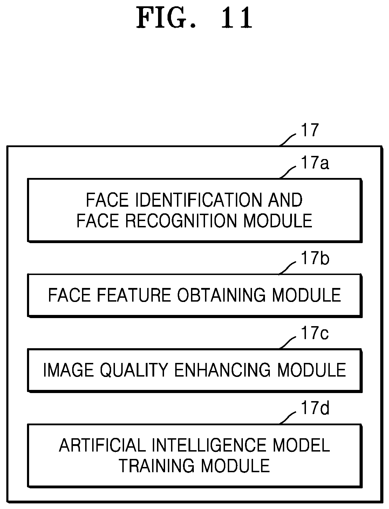

FIG. 11 is a block diagram of a software module stored in a memory of an electronic device, according to an embodiment.

Referring to FIG. 11, the memory 17 may include a face identification and face recognition module 17a, a face feature obtaining module 17b, an image quality enhancing module 17c, and an artificial intelligence model training module 17d as software modules including instructions for the electronic device 10 to perform the embodiments described above with reference to FIGS. 1 to 9. However, the electronic device 10 may perform image quality enhancement by using more software modules than those illustrated in FIG. 11 and may perform image quality enhancement by using fewer software modules than those illustrated in FIG. 10.

For example, by executing, by the processor 13, an instruction stored in the face identification and face recognition module 17a, the electronic device 10 may detect a face from an image and identify a person corresponding to the detected face. Redundant descriptions with the embodiments described above with reference to FIGS. 1 to 9 will be omitted for conciseness.

As another example, by executing, by the processor 13, an instruction stored in the face feature obtaining module 17b, the electronic device 10 may obtain a feature of a face detected from an image. Redundant descriptions with the embodiments described above with reference to FIGS. 1 to 9 will be omitted for conciseness.

As another example, by executing, by the processor 13, an instruction stored in the image quality enhancing module 17c, the electronic device 10 may enhance an image quality of an image. Redundant descriptions with the embodiments described above with reference to FIGS. 1 to 9 will be omitted for conciseness.

As another example, by executing, by the processor 13, an instruction stored in the artificial intelligence model training module 17d, the electronic device 10 may train an artificial intelligence model. Redundant descriptions with the embodiments described above with reference to FIGS. 1 to 9 will be omitted for conciseness.

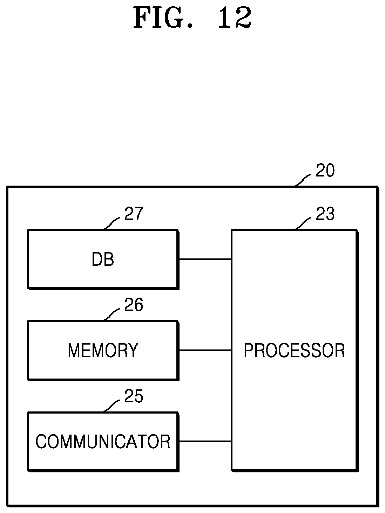

FIG. 12 is a block diagram of a server according to an embodiment.

The server 20 may perform at least one operation of the electronic device 10. Also, the server 20 may perform at least one operation among the operations of the artificial intelligence model 19 described above.

Referring to FIG. 12, the server 20 according to some embodiments may include a communicator 25, a memory 26, a DB 27, and a processor 23.

The communicator 25 may include one or more components for allowing the server 20 to communicate with the electronic device 10.

The memory 26 may store at least one instruction and at least one program for processing and controlling by the processor 23 and may store data that is input to the server 20 or output from the server 20.

The DB 27 may store data received from the electronic device 10. The DB 27 may store a plurality of training data sets to be used to train the artificial intelligence model.

The processor 23 may generally control an overall operation of the server 20. For example, the processor 23 may overall control the DB 27 and the communicator 25 by executing the programs stored in the memory 26 of the server 20. By executing the programs, the processor 23 may perform at least one of the operations of the electronic device 10 and the operation of the server 20 described with reference to FIGS. 1 to 9.

For example, by executing an instruction stored in a face identification and face recognition module 17a, the processor 23 may control the server 20 to detect a face from an image and identify a person corresponding to the detected face. Redundant descriptions with the embodiments described above with reference to FIGS. 1 to 9 will be omitted for conciseness.

As another example, by executing an instruction stored in a face feature obtaining module 17b, the processor 23 may control the server 20 to obtain a feature of a face detected from an image. Redundant descriptions with the embodiments described above with reference to FIGS. 1 to 9 will be omitted for conciseness.

As another example, by executing an instruction stored in an image quality enhancing module 17c, the processor 23 may control the server 20 to enhance an image quality of an image. Redundant descriptions with the embodiments described above with reference to FIGS. 1 to 9 will be omitted for conciseness.

As another example, by executing an instruction stored in an artificial intelligence model training module 17d, the processor 23 may control the server 20 such that the artificial intelligence model learns training data. Redundant descriptions with the embodiments described above with reference to FIGS. 1 to 9 will be omitted for conciseness.

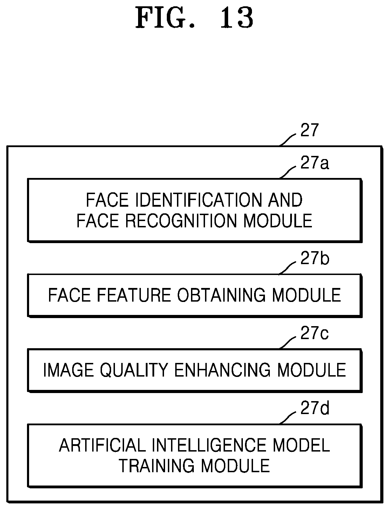

FIG. 13 is a block diagram of a software module stored in a memory of a server, according to an embodiment.

Referring to FIG. 13, the memory 26 may include a face identification and face recognition module 17a, a face feature obtaining module 17b, an image quality enhancing module 17c, and an artificial intelligence model training module 17d as software modules for the server 20 to perform the embodiments described above with reference to FIGS. 1 to 9.

However, the server 20 may perform image quality enhancement by using more software modules than those illustrated in FIG. 13 and may perform image quality enhancement by using fewer software modules than those illustrated in FIG. 12.

For example, by executing, by the processor 13, an instruction stored in the face identification and face recognition module 17a, the electronic device 10 may detect a face from an image and identify a person corresponding to the detected face. Redundant descriptions with the embodiments described above with reference to FIGS. 1 to 9 will be omitted for conciseness.

As another example, by executing, by the processor 13, an instruction stored in the face feature obtaining module 17b, the electronic device 10 may obtain a feature of a face detected from an image. Redundant descriptions with the embodiments described above with reference to FIGS. 1 to 9 will be omitted for conciseness.

As another example, by executing, by the processor 13, an instruction stored in the image quality enhancing module 17c, the electronic device 10 may enhance an image quality of an image. Redundant descriptions with the embodiments described above with reference to FIGS. 1 to 9 will be omitted for conciseness.

As another example, by executing, by the processor 13, an instruction stored in the artificial intelligence model training module 17d, the electronic device 10 may train an artificial intelligence model. Redundant descriptions with the embodiments described above with reference to FIGS. 1 to 9 will be omitted for conciseness.

Some embodiments may also be implemented in the form of computer-readable recording mediums including instructions executable by computers, such as program modules executed by computers. The computer-readable recording mediums may be any available mediums accessible by computers and may include both volatile and non-volatile mediums and detachable and non-detachable mediums. Also, the computer-readable recording media may include computer storage mediums. The computer storage mediums may include both volatile and non-volatile and detachable and non-detachable mediums implemented by any method or technology for storage of information such as computer-readable instructions, data structures, program modules, or other data.

## Claims

1. A method of generating, by an electronic device (10), a second person image (430, 630, 830) of high quality by performing image processing on a first person image (410, 610, 810) of low quality by using an artificial intelligence model (19, 29), the method comprising:
identifying the first person image (410, 610, 810) of low quality from a plurality of images by using a discrimination artificial intelligence model trained to distinguish between a high-quality person image and a high-quality person image generated by an image quality enhancement artificial intelligence model from a low-quality person image;
applying the first person image (410, 610, 810) to the artificial intelligence model (19, 29); and
obtaining the second person image (430, 630, 830) output from the artificial intelligence model (19, 29),
wherein the artificial intelligence model (19, 29) is configured to
identify a first face on the first person image (410, 610, 810) by using a face recognition artificial intelligence model (19, 29),
obtain the second person image (430, 630, 830) by performing image processing for enhancing an image quality of an area corresponding to the first face by using the image quality enhancement artificial intelligence model, and
output the second person image (430, 630, 830) to the electronic device (10).

2. The method of claim 1, wherein the artificial intelligence model (19, 29) is configured to
update the image quality enhancement artificial intelligence model by learning, as training data, a plurality of high-quality person images and a plurality of low-quality person images respectively converted from the plurality of high-quality person images, and
obtain the second person image (430, 630, 830) from the first person image (410, 610, 810) by using the updated image quality enhancement artificial intelligence model.

3. The method of claim 2, wherein the artificial intelligence model (19, 29) is configured to
update, by learning a first high-quality person image and a first low-quality person image generated by applying image degradation to the first high-quality person image, as a pair, the image quality enhancement artificial intelligence model to generate the first high-quality person image from the first low-quality person image, and
obtain the second person image (430, 630, 830) from the first person image (410, 610, 810) by using the updated image quality enhancement artificial intelligence model.

4. The method of claim 1, wherein the artificial intelligence model (19, 29) is configured to
update the face recognition artificial intelligence model and the image quality enhancement artificial intelligence model by performing personalized learning by using a plurality of person images classified by person,
identify the first face and a first person corresponding to the first face from the first person image (410, 610, 810) by using the updated face recognition artificial intelligence model, and
obtain the second person image (430, 630, 830) from the first person image (410, 610, 810) by using the image quality enhancement artificial intelligence model updated with respect to the first person.

5. The method of claim 4, wherein the artificial intelligence model (19, 29) is configured to
lighten the face recognition artificial intelligence model and the image quality enhancement artificial intelligence model updated by the personalized learning,
identify the first person from the first person image (410, 610, 810) by using the lightened face recognition artificial intelligence model, and
obtain the second person image (430, 630, 830) with an enhanced image quality of the first person from the first person image (410, 610, 810) by using the lightened image quality enhancement artificial intelligence model.

6. The method of claim 4, wherein the artificial intelligence model (19, 29) is configured to
obtain a face feature of the first person by learning a plurality of person images about the first person as training data,
identify the first person from the first person image (410, 610, 810) based on the face feature of the first person, and
obtain the second person image (430, 630, 830) with an enhanced image quality of the first person from the first person image (410, 610, 810) based on the face feature of the first person.

7. The method of claim 6, further comprising:
receiving an input for selecting an image quality enhancement area of the first person, from a user (1); and
applying information about the image quality enhancement area selected by the user (1), to the artificial intelligence model (19, 29),
wherein the artificial intelligence model (19, 29) is configured to
update the image quality enhancement artificial intelligence model by additionally learning training data about the image quality enhancement area of the first person, and
obtain, by using the updated image quality enhancement artificial intelligence model, the second person image (430, 630, 830) with an enhanced image quality of an area corresponding to the image quality enhancement area selected by the user (1) in the area corresponding to the first face of the first person.

8. The method of claim 6, further comprising:
receiving an input for selecting an image quality enhancement direction for the first person, from a user (1); and
applying information about the image quality enhancement direction selected by the user (1), to the artificial intelligence model (19, 29),
wherein the artificial intelligence model (19, 29) is configured to
update the image quality enhancement artificial intelligence model by additionally learning training data about the image quality enhancement direction, and
obtain the second person image (430, 630, 830) by modifying the face feature of the first person according to the image quality enhancement direction by using the updated image quality enhancement artificial intelligence model.

9. The method of claim 8, further comprising:
receiving a user (1) input for designating a second person;
obtaining data about the second person; and
applying the data about the second person as training data to the artificial intelligence model (19, 29),
wherein the artificial intelligence model (19, 29) is configured to
obtain a face feature of the second person from the data about the second person, and
obtain the second person image (430, 630, 830) by modifying the face feature of the first person based on the face feature of the second person.

10. A recording medium having stored therein at least one instruction readable by an electronic device (10) that generates a second person image (430, 630, 830) of high quality by performing image processing on a first person image (410, 610, 810) of low quality by using an artificial intelligence model (19, 29), the recording medium allowing the electronic device (10) to execute the at least one instruction to
identify the first person image (410, 610, 810) of low quality from a plurality of images by using a discrimination artificial intelligence model trained to distinguish between a high-quality person image and a high-quality person image generated by an image quality enhancement artificial intelligence model from a low-quality person image,
apply the first person image (410, 610, 810) to the artificial intelligence model (19, 29), and
obtain the second person image (430, 630, 830) output from the artificial intelligence model (19, 29),
wherein the artificial intelligence model (19, 29) is configured to
identify a first face on the first person image (410, 610, 810) by using a face recognition artificial intelligence model,
obtain the second person image (430, 630, 830) by performing image processing for enhancing an image quality of an area corresponding to the first face by using the image quality enhancement artificial intelligence model, and
output the second person image (430, 630, 830) to the electronic device (10).

11. An electronic device (10) for generating a second person image (430, 630, 830) of high quality by performing image processing on a first person image (410, 610, 810) of low quality by using an artificial intelligence model (19, 29), the electronic device (10) comprising:
a memory (17, 26) storing at least one instruction; and
a processor (13, 23) configured to execute the at least one instruction,
wherein the processor (13, 23) is configured to execute the at least one instruction to
identify the first person image (410, 610, 810) of low quality from a plurality of images by using a discrimination artificial intelligence model trained to distinguish between a high-quality person image and a high-quality person image generated by an image quality enhancement artificial intelligence model from a low-quality person image,
apply the first person image (410, 610, 810) to the artificial intelligence model (19, 29), and
obtain the second person image (430, 630, 830) output from the artificial intelligence model (19, 29),
wherein the artificial intelligence model (19, 29) is configured to
identify a first face on the first person image (410, 610, 810) by using a face recognition artificial intelligence model,
obtain the second person image (430, 630, 830) by performing image processing for enhancing an image quality of an area corresponding to the first face by using the image quality enhancement artificial intelligence model, and
output the second person image (430, 630, 830) to the electronic device (10).

12. The electronic device (10) of claim 11, wherein the artificial intelligence model (19, 29) is configured to
update the image quality enhancement artificial intelligence model by learning, as training data, a plurality of high-quality person images and a plurality of low-quality person images respectively converted from the plurality of high-quality person images, and
obtain the second person image (430, 630, 830) from the first person image (410, 610, 810) by using the updated image quality enhancement artificial intelligence model.

13. The electronic device (10) of claim 12, wherein the artificial intelligence model (19, 29) is configured to
update, by learning a first high-quality person image and a first low-quality person image generated by applying image degradation to the first high-quality person image, as a pair, the image quality enhancement artificial intelligence model to generate the first high-quality person image from the first low-quality person image, and
obtain the second person image (430, 630, 830) from the first person image (410, 610, 810) by using the updated image quality enhancement artificial intelligence model.

14. The electronic device (10) of claim 11, wherein the artificial intelligence model (19, 29) is configured to
update the face recognition artificial intelligence model and the image quality enhancement artificial intelligence model by performing personalized learning by using a plurality of person images classified by person,
identify the first face and a first person corresponding to the first face from the first person image (410, 610, 810) by using the updated face recognition artificial intelligence model, and
obtain the second person image (430, 630, 830) from the first person image (410, 610, 810) by using the image quality enhancement artificial intelligence model updated with respect to the first person.

15. The electronic device (10) of claim 14, wherein the artificial intelligence model (19, 29) is configured to
lighten the face recognition artificial intelligence model and the image quality enhancement artificial intelligence model updated by the personalized learning,
identify the first person from the first person image (410, 610, 810) by using the lightened face recognition artificial intelligence model, and
obtain the second person image (430, 630, 830) with an enhanced image quality of the first person from the first person image (410, 610, 810) by using the lightened image quality enhancement artificial intelligence model.

## Patentansprüche

1. Verfahren zum Erzeugen eines zweiten Personenbildes (430, 630, 830) hoher Qualität durch eine elektronische Vorrichtung (10) durch Durchführen einer Bildverarbeitung an einem ersten Personenbild (410, 610, 810) geringer Qualität unter Verwendung eines Modells künstlicher Intelligenz (19, 29), wobei das Verfahren Folgendes umfasst:
Identifizieren des ersten Personenbildes (410, 610, 810) geringer Qualität aus einer Vielzahl von Bildern unter Verwendung eines Unterscheidungsmodells künstlicher Intelligenz, das darauf trainiert ist, zwischen einem Personenbild hoher Qualität und einem durch ein Modell künstlicher Intelligenz zur Bildqualitätsverbesserung aus einem Personenbild geringer Qualität erzeugten Personenbild hoher Qualität zu unterscheiden;
Anwenden des ersten Personenbilds (410, 610, 810) auf das Modell künstlicher Intelligenz (19, 29); und
Erhalten des zweiten Personenbildes (430, 630, 830), das vom Modell künstlicher Intelligenz (19, 29) ausgegeben wird,
wobei das Modell künstlicher Intelligenz (19, 29) dazu konfiguriert ist,
ein erstes Gesicht auf dem ersten Personenbild (410, 610, 810) unter Verwendung eines Modells künstlicher Intelligenz zur Gesichtserkennung (19, 29) zu identifizieren,
das zweite Personenbild (430, 630, 830) durch Durchführen einer Bildverarbeitung zur Verbesserung einer Bildqualität eines dem ersten Gesicht entsprechenden Bereichs unter Verwendung des Modells künstlicher Intelligenz zur Bildqualitätsverbesserung zu erhalten und
das zweite Personenbild (430, 630, 830) an die elektronische Vorrichtung (10) auszugeben.

2. Verfahren nach Anspruch 1, wobei das Modell künstlicher Intelligenz (19, 29) dazu konfiguriert ist,
das Modell künstlicher Intelligenz zur Bildqualitätsverbesserung zu aktualisieren, indem als Trainingsdaten eine Vielzahl von Personenbildern hoher Qualität und eine Vielzahl von Personenbildern geringer Qualität gelernt werden, die jeweils aus der Vielzahl von Personenbildern hoher Qualität konvertiert werden, und
das zweite Personenbild (430, 630, 830) aus dem ersten Personenbild (410, 610, 810) unter Verwendung des aktualisierten Modells künstlicher Intelligenz zur Bildqualitätsverbesserung zu erhalten.

3. Verfahren nach Anspruch 2, wobei das Modell künstlicher Intelligenz (19, 29) dazu konfiguriert ist,
das Modell künstlicher Intelligenz zur Bildqualitätsverbesserung durch Lernen eines ersten Personenbildes hoher Qualität und eines durch Anwenden einer Bildverschlechterung auf das erste Personenbild hoher Qualität erzeugten ersten Personenbildes geringer Qualität als Paar zu aktualisieren, um das erste Personenbild hoher Qualität aus dem ersten Personenbild geringer Qualität zu erzeugen, und
das zweite Personenbild (430, 630, 830) aus dem ersten Personenbild (410, 610, 810) unter Verwendung des aktualisierten Modells künstlicher Intelligenz zur Bildqualitätsverbesserung zu erhalten.

4. Verfahren nach Anspruch 1, wobei das Modell künstlicher Intelligenz (19, 29) dazu konfiguriert ist,
das Modell künstlicher Intelligenz zur Gesichtserkennung und das Modell künstlicher Intelligenz zur Bildqualitätsverbesserung zu aktualisieren, indem personalisiertes Lernen unter Verwendung einer Vielzahl von nach Personen klassifizierten Personenbildern durchgeführt wird,
das erste Gesicht und eine dem ersten Gesicht entsprechende erste Person aus dem ersten Personenbild (410, 610, 810) unter Verwendung des aktualisierten Modell künstlicher Intelligenz zur Gesichtserkennung zu identifizieren und
das zweite Personenbild (430, 630, 830) aus dem ersten Personenbild (410, 610, 810) unter Verwendung des in Bezug auf die erste Person aktualisierten Modell künstlicher Intelligenz zur Bildqualitätsverbesserung zu erhalten.

5. Verfahren nach Anspruch 4, wobei das Modell künstlicher Intelligenz (19, 29) dazu konfiguriert ist,
das Modell künstlicher Intelligenz zur Gesichtserkennung und das Modell künstlicher Intelligenz zur Bildqualitätsverbesserung, welche durch das personalisierte Lernen aktualisiert werden, zu vereinfachen,
die erste Person aus dem ersten Personenbild (410, 610, 810) unter Verwendung des vereinfachten Modells künstlicher Intelligenz zur Gesichtserkennung zu identifizieren und
das zweite Personenbild (430, 630, 830) mit einer verbesserten Bildqualität der ersten Person aus dem ersten Personenbild (410, 610, 810) unter Verwendung des vereinfachten Modells künstlicher Intelligenz zur Bildqualitätsverbesserung zu erhalten.

6. Verfahren nach Anspruch 4, wobei das Modell künstlicher Intelligenz (19, 29) dazu konfiguriert ist,
ein Gesichtsmerkmal der ersten Person durch Lernen einer Vielzahl von Personenbildern über die erste Person als Trainingsdaten zu erhalten,
die erste Person auf der Grundlage des Gesichtsmerkmals der ersten Person aus dem ersten Personenbild (410, 610, 810) zu identifizieren und
das zweite Personenbild (430, 630, 830) mit einer verbesserten Bildqualität der ersten Person aus dem ersten Personenbild (410, 610, 810) auf der Grundlage des Gesichtsmerkmals der ersten Person zu erhalten.

7. Verfahren nach Anspruch 6, umfassend ferner:
Empfangen einer Eingabe zur Auswahl eines Bildqualitätsverbesserungsbereichs der ersten Person von einem Benutzer (1); und
Anwenden von Informationen über den vom Benutzer (1) ausgewählten Bildqualitätsverbesserungsbereich auf das Modell künstlicher Intelligenz (19, 29),
wobei das Modell künstlicher Intelligenz (19, 29) dazu konfiguriert ist,
das Modell künstlicher Intelligenz zur Bildqualitätsverbesserung durch zusätzliches Lernen von Trainingsdaten über den Bildqualitätsverbesserungsbereich der ersten Person zu aktualisieren und
unter Verwendung des aktualisierten Modells künstlicher Intelligenz zur Bildqualitätsverbesserung das zweite Personenbild (430, 630, 830) mit einer verbesserten Bildqualität eines Bereichs zu erhalten, der dem vom Benutzer (1) ausgewählten Bildqualitätsverbesserungsbereich in dem Bereich entspricht, der dem ersten Gesicht der ersten Person entspricht.

8. Verfahren nach Anspruch 6, umfassend ferner:
Empfangen einer Eingabe zur Auswahl einer Bildqualitätsverbesserungsrichtung für die erste Person von einem Benutzer (1); und
Anwenden von Informationen über die vom Benutzer (1) ausgewählte Bildqualitätsverbesserungsrichtung auf das Modell künstlicher Intelligenz (19, 29),
wobei das Modell künstlicher Intelligenz (19, 29) dazu konfiguriert ist,
das Modell künstlicher Intelligenz zur Bildqualitätsverbesserung durch zusätzliches Lernen von Trainingsdaten über die Bildqualitätsverbesserungsrichtung zu aktualisieren und
das zweite Personenbild (430, 630, 830) durch Modifizieren des Gesichtsmerkmals der ersten Person gemäß der Bildqualitätsverbesserungsrichtung unter Verwendung des aktualisierten Modells künstlicher Intelligenz zur Bildqualitätsverbesserung zu erhalten.

9. Verfahren nach Anspruch 8, umfassend ferner:
Empfangen einer Eingabe einer Benutzer (1) zum Bestimmen einer zweiten Person;
Erhalten von Daten über die zweite Person; und
Anwenden der Daten über die zweite Person als Trainingsdaten auf das Modell künstlicher Intelligenz (19, 29),
wobei das Modell künstlicher Intelligenz (19, 29) dazu konfiguriert ist,
ein Gesichtsmerkmal der zweiten Person aus den Daten über die zweite Person zu erhalten und
das zweite Personenbild (430, 630, 830) durch Modifizieren des Gesichtsmerkmals der ersten Person auf der Grundlage des Gesichtsmerkmals der zweiten Person zu erhalten.

10. Aufzeichnungsmedium, auf dem mindestens ein Befehl gespeichert ist, der von einer elektronischen Vorrichtung (10) lesbar ist, die ein zweites Personenbild (430, 630, 830) hoher Qualität durch Durchführen einer Bildverarbeitung an einem ersten Personenbild (410, 610, 810) geringer Qualität unter Verwendung eines Modells künstlicher Intelligenz (19, 29) erzeugt, wobei das Aufzeichnungsmedium es der elektronischen Vorrichtung (10) erlaubt, den mindestens einen Befehl auszuführen, um
das erste Personenbild (410, 610, 810) geringer Qualität aus einer Vielzahl von Bildern unter Verwendung eines Unterscheidungsmodells künstlicher Intelligenz zu identifizieren, das darauf trainiert ist, zwischen einem Personenbild hoher Qualität und einem durch ein Modell künstlicher Intelligenz zur Bildqualitätsverbesserung aus einem Personenbild geringer Qualität erzeugten Personenbild hoher Qualität zu unterscheiden,
das erste Personenbild (410, 610, 810) auf das Modell künstlicher Intelligenz (19, 29) anzuwenden und
das zweite Personenbild (430, 630, 830) zu erhalten, das vom Modell künstlicher Intelligenz (19, 29) ausgegeben wird,
wobei das Modell künstlicher Intelligenz (19, 29) dazu konfiguriert ist,
ein erstes Gesicht auf dem ersten Personenbild (410, 610, 810) unter Verwendung eines Modells künstlicher Intelligenz zur Gesichtserkennung zu identifizieren,
das zweite Personenbild (430, 630, 830) zu erhalten, indem eine Bildverarbeitung zur Verbesserung einer Bildqualität eines dem ersten Gesicht entsprechenden Bereichs unter Verwendung des Modells künstlicher Intelligenz zur Bildqualitätsverbesserung durchgeführt wird, und
das zweite Personenbild (430, 630, 830) an die elektronische Vorrichtung (10) auszugeben.

11. Elektronische Vorrichtung (10) zum Erzeugen eines zweiten Personenbildes (430, 630, 830) hoher Qualität durch Durchführen einer Bildverarbeitung an einem ersten Personenbild (410, 610, 810) geringer Qualität unter Verwendung eines Modells künstlicher Intelligenz (19, 29), wobei die elektronische Vorrichtung (10) Folgendes umfasst:
einen Speicher (17, 26), in dem mindestens ein Befehl gespeichert ist; und
einen Prozessor (13, 23), der dazu konfiguriert ist, den mindestens einen Befehl auszuführen,
wobei der Prozessor (13, 23) dazu konfiguriert ist, den mindestens einen Befehl auszuführen, um
das erste Personenbild (410, 610, 810) geringer Qualität aus einer Vielzahl von Bildern unter Verwendung eines Unterscheidungsmodells künstlicher Intelligenz zu identifizieren, das darauf trainiert ist, zwischen einem Personenbild hoher Qualität und einem durch ein Modell künstlicher Intelligenz zur Bildqualitätsverbesserung aus einem Personenbild geringer Qualität erzeugten Personenbild hoher Qualität zu unterscheiden,
das erste Personenbild (410, 610, 810) auf das Modell künstlicher Intelligenz (19, 29) anzuwenden und
das zweite Personenbild (430, 630, 830) zu erhalten, das vom Modell künstlicher Intelligenz (19, 29) ausgegeben wird,
wobei das Modell künstlicher Intelligenz (19, 29) dazu konfiguriert ist,
ein erstes Gesicht auf dem ersten Personenbild (410, 610, 810) unter Verwendung eines Modells künstlicher Intelligenz zur Gesichtserkennung zu identifizieren,
das zweite Personenbild (430, 630, 830) zu erhalten, indem eine Bildverarbeitung zur Verbesserung einer Bildqualität eines dem ersten Gesicht entsprechenden Bereichs unter Verwendung des Modells künstlicher Intelligenz zur Bildqualitätsverbesserung durchgeführt wird, und
das zweite Personenbild (430, 630, 830) an die elektronische Vorrichtung (10) auszugeben.

12. Elektronische Vorrichtung (10) nach Anspruch 11, wobei das Modell künstlicher Intelligenz (19, 29) dazu konfiguriert ist,
das Modell künstlicher Intelligenz zur Bildqualitätsverbesserung zu aktualisieren, indem als Trainingsdaten eine Vielzahl von Personenbildern hoher Qualität und eine Vielzahl von Personenbildern geringer Qualität gelernt werden, die jeweils aus der Vielzahl von Personenbildern hoher Qualität konvertiert werden, und
das zweite Personenbild (430, 630, 830) aus dem ersten Personenbild (410, 610, 810) unter Verwendung des aktualisierten Modells künstlicher Intelligenz zur Bildqualitätsverbesserung zu erhalten.

13. Elektronische Vorrichtung (10) nach Anspruch 12, wobei das Modell künstlicher Intelligenz (19, 29) dazu konfiguriert ist,
das Modell künstlicher Intelligenz zur Bildqualitätsverbesserung durch Lernen eines ersten Personenbildes hoher Qualität und eines durch Anwenden einer Bildverschlechterung auf das erste Personenbild hoher Qualität erzeugten ersten Personenbildes geringer Qualität als Paar zu aktualisieren, um das erste Personenbild hoher Qualität aus dem ersten Personenbild geringer Qualität zu erzeugen, und
das zweite Personenbild (430, 630, 830) aus dem ersten Personenbild (410, 610, 810) unter Verwendung des aktualisierten Modells künstlicher Intelligenz zur Bildqualitätsverbesserung zu erhalten.

14. Elektronische Vorrichtung (10) nach Anspruch 11, wobei das Modell künstlicher Intelligenz (19, 29) dazu konfiguriert ist,
das Modell künstlicher Intelligenz zur Gesichtserkennung und das Modell künstlicher Intelligenz zur Bildqualitätsverbesserung zu aktualisieren, indem personalisiertes Lernen unter Verwendung einer Vielzahl von nach Personen klassifizierten Personenbildern durchgeführt wird,
das erste Gesicht und eine dem ersten Gesicht entsprechende erste Person aus dem ersten Personenbild (410, 610, 810) unter Verwendung des aktualisierten Modell künstlicher Intelligenz zur Gesichtserkennung zu identifizieren und
das zweite Personenbild (430, 630, 830) aus dem ersten Personenbild (410, 610, 810) unter Verwendung des in Bezug auf die erste Person aktualisierten Modell künstlicher Intelligenz zur Bildqualitätsverbesserung zu erhalten.

15. Elektronische Vorrichtung (10) nach Anspruch 14, wobei das Modell künstlicher Intelligenz (19, 29) dazu konfiguriert ist,
das Modell künstlicher Intelligenz zur Gesichtserkennung und das Modell künstlicher Intelligenz zur Bildqualitätsverbesserung, welche durch das personalisierte Lernen aktualisiert werden, zu vereinfachen,
die erste Person aus dem ersten Personenbild (410, 610, 810) unter Verwendung des vereinfachten Modells künstlicher Intelligenz zur Gesichtserkennung zu identifizieren und
das zweite Personenbild (430, 630, 830) mit einer verbesserten Bildqualität der ersten Person aus dem ersten Personenbild (410, 610, 810) unter Verwendung des vereinfachten Modell künstlicher Intelligenz zur Bildqualitätsverbesserung zu erhalten.

## Revendications

1. Procédé de génération, par un dispositif électronique (10), d'une deuxième image de personne (430, 630, 830) de haute qualité en effectuant un traitement d'image sur une première image de personne (410, 610, 810) de faible qualité à l'aide d'un modèle d'intelligence artificielle (19, 29), le procédé comprenant :
l'identification de la première image de personne (410, 610, 810) de faible qualité parmi une pluralité d'images à l'aide d'un modèle d'intelligence artificielle de discrimination entraîné pour distinguer entre une image de personne de haute qualité et une image de personne de haute qualité générée par un modèle d'intelligence artificielle d'amélioration de qualité d'image à partir d'une image de personne de faible qualité ;
l'application de la première image de personne (410, 610, 810) au modèle d'intelligence artificielle (19, 29) ; et
l'obtention de la deuxième image de personne (430, 630, 830) délivrée en sortie par le modèle d'intelligence artificielle (19, 29),
dans lequel le modèle d'intelligence artificielle (19, 29) est configuré pour
identifier un premier visage sur la première image de personne (410, 610, 810) à l'aide d'un modèle d'intelligence artificielle de reconnaissance faciale (19, 29),
obtenir la deuxième image de personne (430, 630, 830) en effectuant un traitement d'image pour améliorer une qualité d'image d'une zone correspondant au premier visage à l'aide du modèle d'intelligence artificielle d'amélioration de qualité d'image, et
délivrer en sortie la deuxième image de personne (430, 630, 830) au dispositif électronique (10).

2. Procédé selon la revendication 1, dans lequel le modèle d'intelligence artificielle (19, 29) est configuré pour
mettre à jour le modèle d'intelligence artificielle d'amélioration de qualité d'image en apprenant, en tant que données d'entraînement, une pluralité d'images de personne de haute qualité et une pluralité d'images de personne de faible qualité respectivement converties à partir de la pluralité d'images de personne de haute qualité, et
obtenir la deuxième image de personne (430, 630, 830) à partir de la première image de personne (410, 610, 810) à l'aide du modèle d'intelligence artificielle d'amélioration de qualité d'image mis à jour.

3. Procédé selon la revendication 2, dans lequel le modèle d'intelligence artificielle (19, 29) est configuré pour
mettre à jour, en apprenant une première image de personne de haute qualité et une première image de personne de faible qualité générée en appliquant une dégradation d'image à la première image de personne de haute qualité, en tant que paire, le modèle d'intelligence artificielle d'amélioration de qualité d'image pour générer la première image de personne de haute qualité à partir de la première image de personne de faible qualité, et
obtenir la deuxième image de personne (430, 630, 830) à partir de la première image de personne (410, 610, 810) à l'aide du modèle d'intelligence artificielle d'amélioration de qualité d'image mis à jour.

4. Procédé selon la revendication 1, dans lequel le modèle d'intelligence artificielle (19, 29) est configuré pour
mettre à jour le modèle d'intelligence artificielle de reconnaissance faciale et le modèle d'intelligence artificielle d'amélioration de qualité d'image en effectuant un apprentissage personnalisé à l'aide d'une pluralité d'images de personne classées par personne,
identifier le premier visage et une première personne correspondant au premier visage à partir de la première image de personne (410, 610, 810) à l'aide du modèle d'intelligence artificielle de reconnaissance faciale mis à jour, et
obtenir la deuxième image de personne (430, 630, 830) à partir de la première image de personne (410, 610, 810) à l'aide du modèle d'intelligence artificielle d'amélioration de qualité d'image mis à jour relativement à la première personne.

5. Procédé selon la revendication 4, dans lequel le modèle d'intelligence artificielle (19, 29) est configuré pour
alléger le modèle d'intelligence artificielle de reconnaissance faciale et le modèle d'intelligence artificielle d'amélioration de qualité d'image mis à jour par l'apprentissage personnalisé,
identifier la première personne à partir de la première image de personne (410, 610, 810) à l'aide du modèle d'intelligence artificielle de reconnaissance faciale allégé, et
obtenir la deuxième image de personne (430, 630, 830) ayant une qualité d'image améliorée de la première personne à partir de la première image de personne (410, 610, 810) à l'aide du modèle d'intelligence artificielle d'amélioration de qualité d'image allégé.

6. Procédé selon la revendication 4, dans lequel le modèle d'intelligence artificielle (19, 29) est configuré pour
obtenir une caractéristique faciale de la première personne en apprenant une pluralité d'images de personne concernant la première personne en tant que données d'entraînement,
identifier la première personne à partir de la première image de personne (410, 610, 810) sur la base de la caractéristique faciale de la première personne, et
obtenir la deuxième image de personne (430, 630, 830) ayant une qualité d'image améliorée de la première personne à partir de la première image de personne (410, 610, 810) sur la base de la caractéristique faciale de la première personne.

7. Procédé selon la revendication 6, comprenant en outre :
la réception, depuis un utilisateur (1), d'une entrée pour sélectionner une zone d'amélioration de qualité d'image de la première personne ; et
l'application d'informations concernant la zone d'amélioration de qualité d'image sélectionnée par l'utilisateur (1), au modèle d'intelligence artificielle (19, 29),
dans lequel le modèle d'intelligence artificielle (19, 29) est configuré pour
mettre à jour le modèle d'intelligence artificielle d'amélioration de qualité d'image en apprenant en outre des données d'entraînement concernant la zone d'amélioration de qualité d'image de la première personne, et
obtenir, à l'aide du modèle d'intelligence artificielle d'amélioration de qualité d'image mis à jour, la deuxième image de personne (430, 630, 830) ayant une qualité d'image améliorée d'une zone correspondant à la zone d'amélioration de qualité d'image sélectionnée par l'utilisateur (1) dans la zone correspondant au premier visage de la première personne.

8. Procédé selon la revendication 6, comprenant en outre :
la réception, depuis un utilisateur (1), d'une entrée pour sélectionner une direction d'amélioration de qualité d'image pour la première personne ; et
l'application d'informations concernant la direction d'amélioration de qualité d'image sélectionnée par l'utilisateur (1), au modèle d'intelligence artificielle (19, 29),
dans lequel le modèle d'intelligence artificielle (19, 29) est configuré pour
mettre à jour le modèle d'intelligence artificielle d'amélioration de qualité d'image en apprenant en outre des données d'entraînement concernant la direction d'amélioration de qualité d'image, et
obtenir la deuxième image de personne (430, 630, 830) en modifiant la caractéristique faciale de la première personne selon la direction d'amélioration de qualité d'image à l'aide du modèle d'intelligence artificielle d'amélioration de qualité d'image mis à jour.

9. Procédé selon la revendication 8, comprenant en outre :
la réception d'une entrée d'un utilisateur (1) pour désigner une deuxième personne ;
l'obtention de données concernant la deuxième personne ; et
l'application des données concernant la deuxième personne en tant que données d'entraînement au modèle d'intelligence artificielle (19, 29),
dans lequel le modèle d'intelligence artificielle (19, 29) est configuré pour
obtenir une caractéristique faciale de la deuxième personne à partir des données concernant la deuxième personne, et
obtenir la deuxième image de personne (430, 630, 830) en modifiant la caractéristique faciale de la première personne sur la base de la caractéristique faciale de la deuxième personne.

10. Support d'enregistrement ayant stocké en son sein au moins une instruction lisible par un dispositif électronique (10) qui génère une deuxième image de personne (430, 630, 830) de haute qualité en effectuant un traitement d'image sur une première image de personne (410, 610, 810) de faible qualité à l'aide d'un modèle d'intelligence artificielle (19, 29), le support d'enregistrement permettant au dispositif électronique (10) d'exécuter l'au moins une instruction pour
identifier la première image de personne (410, 610, 810) de faible qualité parmi une pluralité d'images à l'aide d'un modèle d'intelligence artificielle de discrimination entraîné pour distinguer entre une image de personne de haute qualité et une image de personne de haute qualité générée par un modèle d'intelligence artificielle d'amélioration de qualité d'image à partir d'une image de personne de faible qualité,
appliquer la première image de personne (410, 610, 810) au modèle d'intelligence artificielle (19, 29), et
obtenir la deuxième image de personne (430, 630, 830) délivrée en sortie par le modèle d'intelligence artificielle (19, 29),
dans lequel le modèle d'intelligence artificielle (19, 29) est configuré pour
identifier un premier visage sur la première image de personne (410, 610, 810) à l'aide d'un modèle d'intelligence artificielle de reconnaissance faciale,
obtenir la deuxième image de personne (430, 630, 830) en effectuant un traitement d'image pour améliorer une qualité d'image d'une zone correspondant au premier visage à l'aide du modèle d'intelligence artificielle d'amélioration de qualité d'image, et
délivrer en sortie la deuxième image de personne (430, 630, 830) au dispositif électronique (10).

11. Dispositif électronique (10) pour générer une deuxième image de personne (430, 630, 830) de haute qualité en effectuant un traitement d'image sur une première image de personne (410, 610, 810) de faible qualité à l'aide d'un modèle d'intelligence artificielle (19, 29), le dispositif électronique (10) comprenant :
une mémoire (17, 26) stockant au moins une instruction ; et
un processeur (13, 23) configuré pour exécuter l'au moins une instruction,
dans lequel le processeur (13, 23) est configuré pour exécuter l'au moins une instruction pour
identifier la première image de personne (410, 610, 810) de faible qualité parmi une pluralité d'images à l'aide d'un modèle d'intelligence artificielle de discrimination entraîné pour distinguer entre une image de personne de haute qualité et une image de personne de haute qualité générée par un modèle d'intelligence artificielle d'amélioration de qualité d'image à partir d'une image de personne de faible qualité,
appliquer la première image de personne (410, 610, 810) au modèle d'intelligence artificielle (19, 29), et
obtenir la deuxième image de personne (430, 630, 830) délivrée en sortie par le modèle d'intelligence artificielle (19, 29),
dans lequel le modèle d'intelligence artificielle (19, 29) est configuré pour
identifier un premier visage sur la première image de personne (410, 610, 810) à l'aide d'un modèle d'intelligence artificielle de reconnaissance faciale,
obtenir la deuxième image de personne (430, 630, 830) en effectuant un traitement d'image pour améliorer une qualité d'image d'une zone correspondant au premier visage à l'aide du modèle d'intelligence artificielle d'amélioration de qualité d'image, et
délivrer en sortie la deuxième image de personne (430, 630, 830) au dispositif électronique (10).

12. Dispositif électronique (10) selon la revendication 11, dans lequel le modèle d'intelligence artificielle (19, 29) est configuré pour
mettre à jour le modèle d'intelligence artificielle d'amélioration de qualité d'image en apprenant, en tant que données d'entraînement, une pluralité d'images de personne de haute qualité et une pluralité d'images de personne de faible qualité respectivement converties à partir de la pluralité d'images de personne de haute qualité, et
obtenir la deuxième image de personne (430, 630, 830) à partir de la première image de personne (410, 610, 810) à l'aide du modèle d'intelligence artificielle d'amélioration de qualité d'image mis à jour.

13. Dispositif électronique (10) selon la revendication 12, dans lequel le modèle d'intelligence artificielle (19, 29) est configuré pour
mettre à jour, en apprenant une première image de personne de haute qualité et une première image de personne de faible qualité générée en appliquant une dégradation d'image à la première image de personne de haute qualité, en tant que paire, le modèle d'intelligence artificielle d'amélioration de qualité d'image pour générer la première image de personne de haute qualité à partir de la première image de personne de faible qualité, et
obtenir la deuxième image de personne (430, 630, 830) à partir de la première image de personne (410, 610, 810) à l'aide du modèle d'intelligence artificielle d'amélioration de qualité d'image mis à jour.

14. Dispositif électronique (10) selon la revendication 11, dans lequel le modèle d'intelligence artificielle (19, 29) est configuré pour
mettre à jour le modèle d'intelligence artificielle de reconnaissance faciale et le modèle d'intelligence artificielle d'amélioration de qualité d'image en effectuant un apprentissage personnalisé à l'aide d'une pluralité d'images de personne classées par personne,
identifier le premier visage et une première personne correspondant au premier visage à partir de la première image de personne (410, 610, 810) à l'aide du modèle d'intelligence artificielle de reconnaissance faciale mis à jour, et
obtenir la deuxième image de personne (430, 630, 830) à partir de la première image de personne (410, 610, 810) à l'aide du modèle d'intelligence artificielle d'amélioration de qualité d'image mis à jour relativement à la première personne.

15. Dispositif électronique (10) selon la revendication 14, dans lequel le modèle d'intelligence artificielle (19, 29) est configuré pour
alléger le modèle d'intelligence artificielle de reconnaissance faciale et le modèle d'intelligence artificielle d'amélioration de qualité d'image mis à jour par l'apprentissage personnalisé,
identifier la première personne à partir de la première image de personne (410, 610, 810) à l'aide du modèle d'intelligence artificielle de reconnaissance faciale allégé, et
obtenir la deuxième image de personne (430, 630, 830) ayant une qualité d'image améliorée de la première personne à partir de la première image de personne (410, 610, 810) à l'aide du modèle d'intelligence artificielle d'amélioration de qualité d'image allégé.
